# EUROPEAN PATENT SPECIFICATION

(11) **EP 4 227 329 B1**
(45) Date of publication and mention of the grant of the patent: **22.04.2026**
(21) Application number: 21877761.3
(22) Date of filing: 08.10.2021
(51) Int. Cl.: H01M 8/1004, H01M 4/86, H01M 8/10, H01M 8/1039, H01M 8/1067, H01M 8/1027, H01M 8/1023, H01M 8/1018, H01M 8/1011, H01M 8/02, H01M 4/92, H01M 8/1025, H01M 8/1032, H01M 8/1044, H01M 8/1081, H01M 8/1088

(54) **MEMBRANE ELECTRODE ASSEMBLY AND POLYMER ELECTROLYTE FUEL CELL**
MEMBRANELEKTRODENANORDNUNG UND POLYMERELEKTROLYTBRENNSTOFFZELLE
ASSEMBLAGE ÉLECTRODE-MEMBRANE ET PILE À COMBUSTIBLE À POLYMÈRE ÉLECTROLYTE

(30) Priority: 09.10.2020 JP 2020171392
(43) Date of publication of application: 16.08.2023
(73) Proprietor: AGC INC., Chiyoda-ku, Tokyo 1008405 (JP)
(72) Inventor: KAWAMOTO, Masako, Tokyo 100-8405 (JP); SAITO, Susumu, Tokyo 100-8405 (JP)
(74) Representative: Müller-Boré & Partner Patentanwälte PartG mbB
(86) International application number: PCT/JP2021/037419
(87) International publication number: WO 2022/075462

(56) References cited:
- WO-A1-2020/145287
- WO-A1-2020/175675
- WO-A1-2020/184681
- JP-A- 2017 216 187
- JP-A- 2019 149 223
- JP-A- 2020 524 379

## Description

### TECHNICAL FIELD

The present invention relates to a membrane electrode assembly and a polymer electrolyte fuel cell.

### BACKGROUND ART

It is known that a membrane electrode assembly which a polymer electrolyte fuel cell has, comprises an anode having a catalyst layer containing a proton-conducting polymer, a cathode having a catalyst layer containing a proton-conducting polymer, and a solid polymer electrolyte membrane disposed between said anode and said cathode.

Patent document 1 discloses that a proton-conducting polymer containing units having a cyclic ether structure is used in the catalyst layer of the cathode.

### PRIOR ART DOCUMENT

### PATENT DOCUMENT

| | |
|---|---|
| Patent Document 1: | Japanese Patent No. 5521427 |

### DISCLOSURE OF INVENTION

### TECHNICAL PROBLEM

In recent years, a further improvement of the power generation efficiency of a fuel cell is required. The present inventors have found that there is room for improvement in the power generation efficiency of a fuel cell in a case where a proton-conducting polymer containing units having a cyclic ether structure is used in the catalyst layer, as disclosed in Patent Document 1.

In view of the above circumstances, the present invention is concerned with providing a membrane electrode assembly and a polymer electrolyte fuel cell which can form a fuel cell excellent in the power generation efficiency.

### SOLUTION TO PROBLEM

The present inventors have studied the above problem and, as a result, have found that, in a membrane electrode assembly comprising an anode and a cathode each having a catalyst layer and a solid polymer electrolyte membrane, in a case where the catalyst layer of at least one of the anode and the cathode contains a polymer (H) having units containing a cyclic ether structure and an ion exchange group, the thickness of the solid polymer electrolyte membrane is from 5 to 15 µm, and when the content of the units containing a cyclic ether structure in the polymer (H) is M1 [mol%], and the thickness of the solid polymer electrolyte membrane is T1 [µm], the ratio of M1 to T1 (M1/T1) is 4.5 or more, it is possible to obtain a fuel cell excellent in the power generation efficiency, and thus have arrived at the present invention.

That is, the present inventors have found that the above problem can be solved by the following constructions.
[1] A membrane electrode assembly comprising an anode having a catalyst layer containing a proton-conducting polymer and a catalyst, a cathode having a catalyst layer containing a proton-conducting polymer and a catalyst, and a solid polymer electrolyte membrane disposed between said anode and said cathode, wherein
   said proton-conducting polymer in said catalyst layer of at least one of said anode and said cathode is a polymer (H) having units containing a cyclic ether structure and having an ion exchange group;
   said solid polymer electrolyte membrane contains a fluorinated polymer (S) having an ion exchange group;
   the thickness of said solid polymer electrolyte membrane is from 5 to 15 µm; and
   when the content of said units containing a cyclic ether structure in said polymer (H) is M1 [mol%], and the thickness of said solid polymer electrolyte membrane is T1 [µm], the ratio of said M1 to said T1 (M1/T1) is 4.5 or more.
[2] The membrane electrode assembly according to [1], wherein the content of said units containing a cyclic ether structure is from 50 to 80 mol% to all units contained in said polymer (H).
[3] The membrane electrode assembly according to [1] or [2], wherein said units containing a cyclic ether structure are at least one type of units selected from the group consisting of units represented by the after-described formula (u11), units represented by the after-described formula (u12), units represented by the after-described formula (u21), units represented by the after-described formula (u22) and units represented by the after-described formula (u24):
   in the formula (u11), R¹¹ is a divalent perfluoroalkylene group which may have an ether-bonding oxygen atom, R¹², R¹³, R¹⁵ and R¹⁶ are each independently a monovalent perfluoroalkyl group which may have an ether-bonding oxygen atom, or a fluorine atom, and R¹⁴ is a monovalent perfluoroalkyl group which may have an ether-bonding oxygen atom, a fluorine atom or -R¹¹(SO₂X(SO₂R^{f})ₐ)⁻M⁺, where M⁺ is H⁺, a monovalent metal cation, or an ammonium ion in which at least one hydrogen atom may be substituted by a hydrocarbon group, R^{f} is a linear or branched perfluoroalkyl group which may have an ether-bonding oxygen atom, X is an oxygen atom, a nitrogen atom or a carbon atom, and when X is an oxygen atom, a = 0, when X is a nitrogen atom, a = 1, and when X is a carbon atom, a = 2;
   in the formula (u12), R²¹ is a C₁₋₆ perfluoroalkylene group or a C₂₋₆ perfluoroalkylene group having an ether-bonding oxygen atom between carbon-carbon bonds, R²² is a fluorine atom, a C₁₋₆ perfluoroalkyl group, a C₂₋₆ perfluoroalkyl group having an ether-bonding oxygen atom between carbon-carbon bonds, or a group represented by -R²¹(SO₂X(SO₂R^{f})ₐ)⁻M⁺, where M⁺, R^{f}, X and a are the same as defined above;
   in the formula (u21), R⁴¹, R⁴², R⁴³, R⁴⁴, R⁴⁵ and R⁴⁶ are each independently a monovalent perfluoroalkyl group which may have an ether-bonding oxygen atom, or a fluorine atom;
   in the formula (u22), s is 0 or 1, R⁵¹ and R⁵² are each independently a fluorine atom, a C₁₋₅ perfluoroalkyl group, or a spiro ring formed by linking each other (provided that s is 0), R⁵³ and R⁵⁴ are each independently a fluorine atom or a C₁₋₅ perfluoroalkyl group, and R⁵⁵ is a fluorine atom, a C₁₋₅ perfluoroalkyl group or a C₁₋₅ perfluoroalkoxy group; and
   in the formula (u24), R⁷¹, R⁷², R⁷³, R⁷⁴, R⁷⁵ and R⁷⁶ are each independently a monovalent perfluoroalkyl group which may have an ether-bonding oxygen atom, or a fluorine atom.
[4] The membrane electrode assembly according to [3], wherein said units containing a cyclic ether structure include units represented by said formula (u22).
[5] The membrane electrode assembly according to [4], wherein when the content of said formula (u22) in said polymer (H) is M2 [mol%], the ratio of said M2 to said T1 (M2/T1) is 4.5 or more.
[6] The membrane electrode assembly according to any one of [1] to [5], wherein said polymer (H) further has units based on a perfluoromonomer, and said units based on a perfluoromonomer are units which do not contain a cyclic ether structure and have an ion exchange group.
[7] The membrane electrode assembly according to [6], wherein said units based on a perfluoromonomer are units represented by the after-described formula (u32):
   in the formula (u32), Q¹ is a perfluoroalkylene group which may have an ether-bonding oxygen atom, Q² is a single bond, or a perfluoroalkylene group which may have an ether-bonding oxygen atom, Y is a fluorine atom or a monovalent perfluoroalkyl group, q is 0 or 1, R^{f} are, if two or more, each independently a linear or branched perfluoroalkyl group which may have an ether-bonding oxygen atom, a plurality of X are each independently an oxygen atom, a nitrogen atom or a carbon atom, and when X is an oxygen atom, a = 0, when X is a nitrogen atom, a = 1, and when X is a carbon atom, a = 2.
[8] The membrane electrode assembly according to any one of [1] to [7], wherein said fluorinated polymer (S) has at least one of units represented by the after-described formula (u31) and units represented by the after-described formula (u32):
   in the formula (u31), Z is a fluorine atom or a trifluoromethyl group, q is 0 or 1, m is an integer of from 0 to 3, p is 0 or 1, n is an integer of from 1 to 12, m+p>0, M⁺ is H⁺, a monovalent metal cation, or an ammonium ion in which at least one hydrogen atom may be substituted by a hydrocarbon group;
   in the formula (u32), Q¹ is a perfluoroalkylene group which may have an ether-bonding oxygen atom, Q² is a single bond or a perfluoroalkylene group which may have an ether-bonding oxygen atom, Y is a fluorine atom, or a monovalent perfluoroalkylene group which may have an ether-bonding oxygen atom, q is 0 or 1, R^{f} are, if two or more, each independently a linear or branched perfluoroalkyl group which may have an ether-bonding oxygen atom, and a plurality of X are each independently an oxygen atom, a nitrogen atom or a carbon atom, and when X is an oxygen atom, a = 0, when X is a nitrogen atom, a = 1, and when X is a carbon atom, a = 2.
[9] The membrane electrode assembly according to any one of [1] to [8], wherein the ion exchange group which said polymer (H) has, is a group represented by the formula (g1):

   -(SO₂X(SO₂R^{f})ₐ)⁻M⁺ (g1)

   in the formula (g1), M⁺ is H⁺, a monovalent metal cation, or an ammonium ion in which at least one hydrogen atom may be substituted by a hydrocarbon group, R^{f} are, if two or more, each independently a linear or branched perfluoroalkyl group which may have an ether-bonding oxygen atom, and a plurality of X are each independently an oxygen atom, a nitrogen atom or a carbon atom, and when X is an oxygen atom, a = 0, when X is a nitrogen atom, a = 1, and when X is a carbon atom, a = 2.
[10] The membrane electrode assembly according to any one of [1] to [9], wherein the ion exchange capacity of the polymer (H) is from 1.1 to 2.8 milliequivalents/g.
[11] The membrane electrode assembly according to any one of [1] to [10], wherein the TQ value of the polymer (H) is from 200 to 330°C.
[12] The membrane electrode assembly according to any one of [1] to [11], which is suitable for a polymer electrolyte fuel cell.
[13] A polymer electrolyte fuel cell comprising a membrane electrode assembly as defined in any one of [1] to [12].

### ADVANTAGEOUS EFFECTS OF INVENTION

According to the present invention, it is possible to provide a membrane electrode assembly which can form a fuel cell excellent in the power generation efficiency, and a polymer electrolyte fuel cell.

### BRIEF DESCRIPTION OF DRAWING

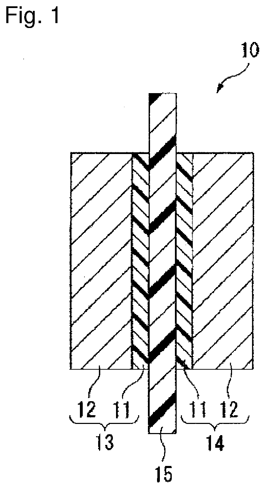

Fig. 1 is a schematic cross-sectional view showing an example of the membrane electrode assembly of the present invention.

### DESCRIPTION OF EMBODIMENTS

The meanings of terms in the present invention are as follows.

A "unit" in a polymer means an atomic group derived from a single monomer molecule, which is formed by polymerization of the monomer. The unit may be an atomic group formed directly by the polymerization reaction, or it may be an atomic group in which a part of the atomic group has been converted to another structure by processing the polymer obtained by the polymerization reaction. The content (mol%) of each unit to all units contained in the polymer is obtained by analyzing the polymer by nuclear magnetic resonance spectroscopy.

A "precursor group for an ion exchange group" means a group which can be converted to an ion exchange group by hydrolysis treatment, acid-form treatment or another treatment such as a salt exchange to a metal cation.

A "precursor polymer" means a polymer in which an ion exchange group is in a state of a precursor group and which can be converted to a polymer having an ion exchange group.

The "TQ value" is the volumetric flow rate value of a polymer and is obtained by the method described in Examples.

A numerical range expressed by using " to " means a range that includes the numerical values listed before and after " to " as the lower and upper limit values.

A unit represented by the formula (u11) is denoted as unit (u11). Units represented by other formulas are also denoted in the same manner.

A monomer represented by the formula (m11) is denoted as monomer (m11). Monomers represented by other formulas are also denoted in the same manner.

A group represented by the formula (g1) is denoted as group (g1). Groups represented by other formulas are also denoted in the same manner.

Unit (u11), unit (u12), unit (u21), unit (u22) and unit (u24) may be collectively referred to as a "specific cyclic ether structure unit".

Monomer (m11), monomer (m12), monomer (m21), monomer (m22) and monomer (m24) may be collectively referred to as a "specific cyclic monomer".

The membrane electrode assembly of the present invention is a membrane electrode assembly comprising an anode having a catalyst layer containing a proton-conducting polymer and a catalyst, a cathode having a catalyst layer containing a proton-conducting polymer and a catalyst, and a solid polymer electrolyte membrane disposed between said anode and said cathode.

Further, said proton-conducting polymer contained in said catalyst layer of at least one of said anode and said cathode is a polymer (H) having units containing a cyclic ether structure (hereinafter referred to also as "cyclic ether structure units") and having an ion exchange group.

Further, said solid polymer electrolyte membrane contains a fluorinated polymer (S) having an ion exchange group (hereinafter referred to also as "polymer (S)").

Further, the thickness of said solid polymer electrolyte membrane is from 5 to 15 µm.

Further, when the content of said units containing a cyclic ether structure to all units contained in said polymer (H) is M1 [mol%] and the thickness of said solid polymer electrolyte membrane is T1 [µm], the ratio of said M1 to said T1 (M1/T1) is 4.5 or more.

The membrane electrode assembly of the present invention is suitable for use in a polymer electrolyte fuel cell.

By using the membrane electrode assembly of the present invention, it is possible to obtain a fuel cell excellent in the power generation efficiency. The details of the reason for this have not been clarified, but are assumed to be due to the following reasons.

It is known that when the polymer (H) has cyclic ether structure units, the power generation efficiency of the fuel cell is improved due to the superior oxygen permeability of the catalyst layer. However, the present inventors have studied and found that there is room for improvement in the power generation efficiency of the fuel cell depending on the thickness of the solid polymer electrolyte membrane and the content of cyclic ether structure units in the polymer (H).

Based on these problems, the present inventors have focused on the relationship between the thickness of the polymer electrolyte membrane and the content of cyclic ether structure units in the polymer (H), and have found that if the relationship between them meets a predetermined value (i.e. M1/T1 is 4.5 or more), a fuel cell excellent in the power generation efficiency can be obtained as shown in Examples given later.

Fig. 1 is a schematic cross-sectional view showing an example of the membrane electrode assembly of the present invention. The membrane electrode assembly 10 comprises an anode 13 having a catalyst layer 11 and a gas diffusion layer 12, a cathode 14 having a catalyst layer 11 and a gas diffusion layer 12, and a solid polymer electrolyte membrane 15 disposed between the anode 13 and the cathode 14 in a state in contact with the catalyst layers 11.

In the following description, the anode and the cathode may be referred to collectively as "electrodes".

### [Electrodes (anode and cathode)]

The anode 13 and the cathode 14 each have a catalyst layer 11 and a gas diffusion layer 12.

### <Catalyst layer>

The proton-conducting polymer contained in at least one of the catalyst layer 11 of the anode 13 and the catalyst layer 11 of the cathode 14, may be the polymer (H), and both proton-conducting polymers may be the polymer (H). If the proton-conducting polymer in one of the catalyst layers 11 is the polymer (H) and the proton-conducting polymer in the other catalyst layer 11 is not a polymer (H), as the proton-conducting polymer contained in the latter catalyst layer 11, the polymer (S) as described later is preferred.

In the membrane electrode assembly of the present invention, it is preferred that the proton-conducting polymer contained in at least the cathode is the polymer (H) from the viewpoint of gas permeability.

The thickness of the catalyst layer is preferably from 1 to 20 µm, particularly preferably from 3 to 10 µm, from the viewpoint of facilitating gas diffusion in the catalyst layer and improving the power generation performance of the polymer electrolyte fuel cell.

The thickness of the catalyst layer is the value to be measured by observing the cross section of the catalyst layer by a scanning electron microscope, etc., and means the arithmetic mean value of any optional 10 points.

### (Polymer (H))

Polymer (H) is a polymer having cyclic ether structure units and an ion exchange group.

The cyclic ether structure units are preferably the following specific cyclic ether structure units from the viewpoint of obtaining a catalyst layer with better oxygen permeability.

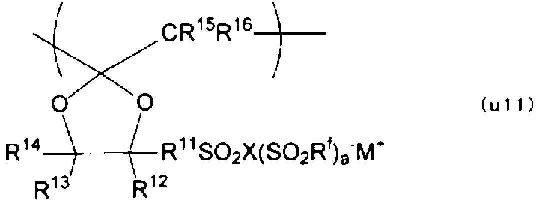

In the formula (u11), R¹¹ is a divalent perfluoroalkylene group that may have an ether-bonding oxygen atom. In a case where the perfluoroalkylene group has an ether-bonding oxygen atom, the number of oxygen atoms may be one, or two or more. The oxygen atom may be located between carbon-carbon bonds of the perfluoroalkylene group or may be located at the carbon atom bond terminal. The perfluoroalkylene group may be linear or branched, but linear is preferred.

R¹², R¹³, R¹⁵ and R¹⁶ are each independently a monovalent perfluoroalkyl group which may have an ether-bonding oxygen atom, or a fluorine atom. It is preferred that at least one of R¹⁵ and R¹⁶ is a fluorine atom, and it is more preferred that both are fluorine atoms, from such a viewpoint that the polymerization reactivity will be high.

In the formula (u11), R¹⁴ is a monovalent perfluoroalkyl group which may have an ether-bonding oxygen atom, a fluorine atom, or a group represented by -R¹¹(SO₂X(SO₂R^{f})ₐ)⁻M⁺. In a case where the perfluoroalkyl group has an ether-bonding oxygen atom, the number of oxygen atoms may be one, or two or more. The oxygen atom may be located between carbon-carbon bonds of the perfluoroalkyl group or may be located at the carbon atom bond terminal. The perfluoroalkyl group may be linear or branched, but linear is preferred. When the formula (u11) contains two R¹¹, the two R¹¹ may be the same or different from each other.

In the formula (u11), M⁺ is H⁺, a monovalent metal cation (e.g. potassium ion or sodium ion) or an ammonium ion in which at least one hydrogen atom may be substituted by a hydrocarbon group (e.g. methyl or ethyl group), and from the viewpoint of high conductivity, H⁺ is preferred.

In the formula (u11), R^{f} is a linear or branched perfluoroalkyl group which may have an ether-bonding oxygen atom. The number of carbon atoms in the perfluoroalkyl group is preferably from 1 to 8, particularly preferably from 1 to 6. In a case of having two or more R^{f}, the two or more R^{f} may be the same or different from each other.

In the formula (u11), X is an oxygen atom, a nitrogen atom, or a carbon atom, and when X is an oxygen atom, a = 0, when X is a nitrogen atom, a = 1, and when X is a carbon atom, a = 2.

A specific example of the -SO₂X(SO₂R^{f})ₐ)⁻M⁺ group may be a sulfonic acid group (-SO₃⁻M⁺ group), a sulfonimide group (-SO₂N(SO₂R^{f})⁻M⁺ group), or a sulfonemethide group (-SO₂C(SO₂R^{f})₂)⁻M⁺ group.

Units (u11) are preferably units (u11-1).

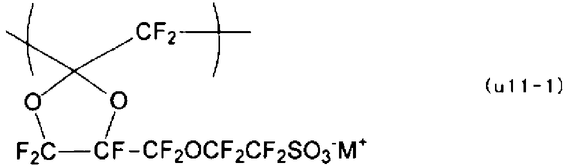

In the above formula (u11-1), M⁺ is synonymous with M⁺ in the formula (u11).

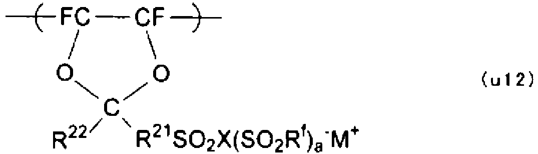

In the formula (u12), R²¹ is a C₁₋₆ perfluoroalkylene group, or a C₂₋₆ perfluoroalkylene group having an ether-bonding oxygen atom between carbon-carbon bonds. In a case where the perfluoroalkylene group has an ether-bonding oxygen atom, the number of oxygen atoms may be one, or two or more. The perfluoroalkylene group may be linear or branched, but linear is preferred.

In the formula (u12), R²² is a fluorine atom, a C₁₋₆ perfluoroalkyl group, a C₂₋₆ perfluoroalkyl group having an ether-bonding oxygen atom between carbon-carbon bonds, or a group represented by -R²¹(SO₂X(SO₂R^{f})ₐ)⁻M⁺. In a case where the perfluoroalkyl group has an ether-bonding oxygen atom, the number of oxygen atoms may be one, or two or more. The perfluoroalkyl group may be linear or branched, but linear is preferred. In a case where the formula (u12) contains two R²¹, the two R²¹ may be the same or different from each other.

In the formula (u12), M⁺, R^{f}, X and a are, respectively, synonymous with M⁺, R^{f}, X and a in the formula (u11).

Specific examples of units (u12) include units (u12-1) and units (u12-2). In the formula, M⁺ is synonymous with M⁺ in the formula (u11).

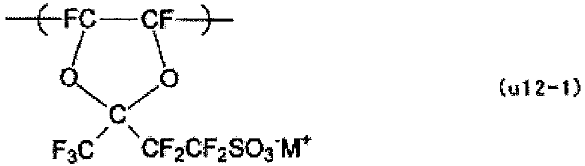

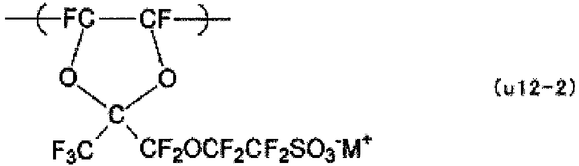

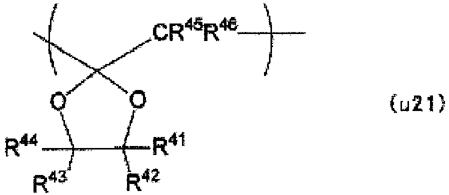

In the formula (u21), R⁴¹, R⁴², R⁴³, R⁴⁴, R⁴⁵ and R⁴⁶ are each independently a monovalent perfluoroalkyl group which may have an ether-bonding oxygen atom, or a fluorine atom. In a case where the perfluoroalkyl group has an ether-bonding oxygen atom, the number of oxygen atoms may be one, or two or more. The oxygen atom may be located between carbon-carbon bonds of the perfluoroalkyl group or may be located at the carbon atom bond terminal. The perfluoroalkyl group may be linear or branched, but linear is preferred.

In the formula (u21), from such a viewpoint that the polymerization reactivity will be high, at least one of R⁴⁵ and R⁴⁶ is preferably a fluorine atom, and it is particularly preferred that both of them are fluorine atoms.

As units (u21), units (u21-1) are preferred.

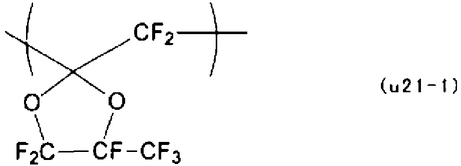

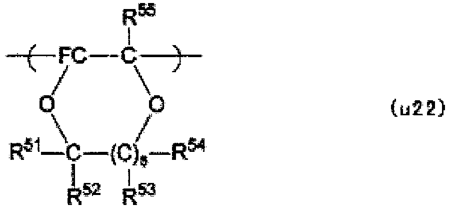

In the formula (u22), s is 0 or 1, and 0 is preferred.

In the formula (u22), R⁵¹ and R⁵² are each independently a fluorine atom, a C₁₋₅ perfluoroalkyl group, or a spiro ring formed by linking each other (provided that s is 0).

In the formula (u22), R⁵³ and R⁵⁴ are each independently a fluorine atom or a C₁₋₅ perfluoroalkyl group.

In the formula (u22), R⁵⁵ is a fluorine atom, a C₁₋₅ perfluoroalkyl group, or a C₁₋₅ perfluoroalkoxy group. R⁵⁵ is preferably a fluorine atom from such a viewpoint that the polymerization reactivity will be high.

The perfluoroalkyl group and the perfluoroalkoxy group may be linear or branched, but linear is preferred.

As units (u22), units (u22-1) are preferred.

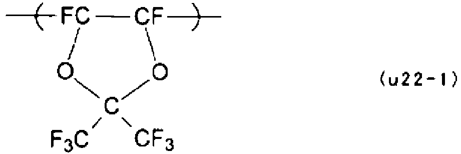

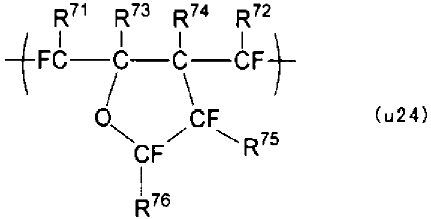

In the formula (u24), R⁷¹ to R⁷⁶ are each independently a monovalent perfluoroalkyl group that may have an ether-bonding oxygen atom, or a fluorine atom. In a case where the perfluoroalkyl group has an ether-bonding oxygen atom, the number of oxygen atoms may be one, or two or more. The oxygen atom may be inserted between carbon-carbon bonds of the perfluoroalkyl group or may be inserted at the carbon atom bond terminal. The perfluoroalkyl group may be linear or branched, but linear is preferred.

R⁷¹ to R⁷⁴ are preferably fluorine atoms in such a viewpoint that the polymerization reactivity will be high.

The content of the cyclic ether structure units is preferably at least 30 mol%, particularly preferably at least 50 mol%, to all units contained in the polymer (H), from such a viewpoint that the power generation efficiency of the fuel cell will be superior.

The upper limit of the content of the cyclic ether structure units is preferably 100 mol%, to all units contained in the polymer (H), and from such a viewpoint that the occurrence of cracks in the electrodes can be prevented, and from the viewpoint of the power generation efficiency, 80 mol% is particularly preferred.

The polymer (H) may contain only one type of cyclic ether structure units, or two or more types. In a case where two or more types are contained, the above content means the total amount of them.

The polymer (H) may further have units based on a perfluoromonomer.

However, the above units based on a perfluoromonomer do not contain a cyclic ether structure and have units having an ion exchange group. Hereafter, such units will be referred to simply as "units based on a perfluoromonomer".

As the units based on a perfluoromonomer, units (u31) and units (u32) may be mentioned, and from such a viewpoint that the power generation efficiency of a fuel cell will be superior, units (u32) are preferred.

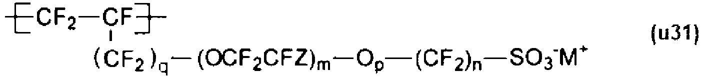

In the formula (u31), Z is a fluorine atom or a trifluoromethyl group, q is 0 or 1, m is an integer of from 0 to 3, p is 0 or 1, n is an integer of from 1 to 12, and m + p > 0.

M⁺ is synonymous with M⁺ in the above formula (u11).

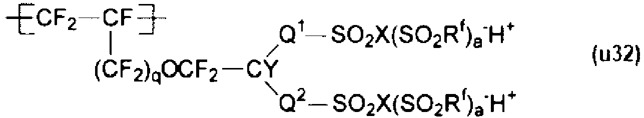

In the formula (u32), Q¹ is a perfluoroalkylene group which may have an ether-bonding oxygen atom.

In the formula (u32), Q² is a single bond or a perfluoroalkylene group which may have an ether-bonding oxygen atom.

In a case where the perfluoroalkylene groups in Q¹ and Q² have ether-bonding oxygen atoms, the number of oxygen atoms may be one, or two or more. The oxygen atom may be located between carbon atom-carbon atom bonds of the perfluoroalkylene group or may be located at the carbon atom bond terminal.

The perfluoroalkylene group may be linear or branched, but linear is preferred. The number of carbon atoms in the perfluoroalkylene group is preferably from 1 to 6, particularly preferably from 1 to 4. When the number of carbon atoms is at most 6, the boiling point of the fluorinated monomer as a raw material will be lower, which facilitates distillation and purification. When the number of carbon atoms is at most 6, the decrease in ion exchange capacity of the polymer (H) will be suppressed, whereby the proton conductivity will be good.

Q² is preferably a C₁₋₆ perfluoroalkylene group which may have an ether-bonding oxygen atom. When Q² is a C₁₋₆ perfluoroalkylene group which may have an ether-bonding oxygen atom, the stability of power generation performance will be superior when the fuel cell is operated for a long period of time, as compared to a case where Q² is a single bond.

At least one of Q¹ and Q² is preferably a C₁₋₆ perfluoroalkylene group having an etheric oxygen atom. A monomer having a C₁₋₆ perfluoroalkylene group having an etheric oxygen atom can be synthesized without undergoing a fluorination reaction with fluorine gas, whereby the yield is good and the production is easy.

In the formula (u32), Y is a fluorine atom, or a monovalent perfluoroalkyl group which may have an etheric oxygen atom. Y is preferably a fluorine atom, or a C₁₋₆ linear perfluoroalkyl group which may have an etheric oxygen atom.

In the formula (u32), q is 0 or 1.

In the formula (u32), R^{f}, X and a are, respectively, synonymous with R^{f}, X and a in the above formula (u11).

As the units (u32), from such a viewpoint that the production is easy, and the industrial implementation is easy, units (u32-1) to (u32-3) are preferred, and units (u32-1) is particularly preferred.

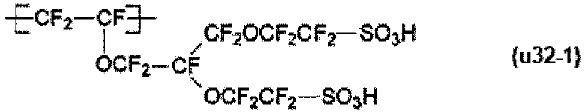

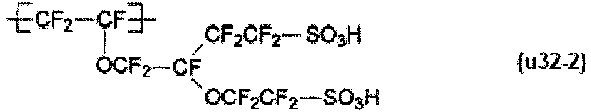

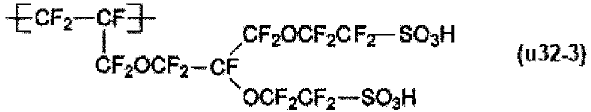

The polymer (H) may further contain units based on tetrafluoroethylene (TFE), whereby the water repellency will be imparted, the ability of the catalyst layer to expel water will be increased, and the power generation efficiency of the fuel cell will be improved.

The content of units based on tetrafluoroethylene is preferably from 0 to 40 mol%, more preferably from 5 to 35 mol%, particularly preferably from 5 to 30 mol%, to all units contained in the polymer (H).

The total content of units based on perfluoromonomers is preferably from 5 to 40 mol%, more preferably from 10 to 35 mol%, particularly preferably from 15 to 30 mol%, to all units contained in the polymer (H).

The polymer (H) may contain only one type of units based on a perfluoromonomer or may contain two or more types. When two or more types are contained, the above content means the total amount of them.

The polymer (H) may further contain units based on tetrafluoroethylene (TFE), whereby the water repellency will be imparted, the ability of the catalyst layer to expel water will be increased, and the power generation efficiency of the fuel cell will be improved.

The content of units based on TFE is preferably from 0 to 40 mol%, more preferably from 5 to 35 mol%, particularly preferably from 5 to 30 mol%, to all units contained in the polymer (H).

The polymer (H) may contain units other than those listed above (hereinafter referred to as "other units"). Specific examples of such other units include units based on monomers such as perfluoro(3-butenylvinyl ether), perfluoro(allyl vinyl ether), perfluoroα-olefins (such as hexafluoropropylene, etc.), perfluoro(alkyl vinyl ethers), etc.

Group (g1) is preferred as the ion exchange group which the polymer (H) has.

-(SO₂X(SO₂R^{f})ₐ)⁻M⁺ (g1)

In group (g1), M⁺, R^{f}, X and a are, respectively, synonymous with M⁺, R^{f}, X and a in the above formula (u11).

A specific example of the group (g1) may be a sulfonic acid group (-SO₃⁻M⁺ group), a sulfonimide group (-SO₂N(SO₂R^{f})⁻M⁺ group) or a sulfonemethide group (-SO₂C(SO₂R^{f})₂)⁻M⁺ group), and a sulfonic acid group (-SO₃⁻M⁺ group) is preferred.

The polymer (H) is a polymer having an ion exchange group, but in a case where the cyclic ether structure units in the polymer (H) have an ion exchange group, it does not necessarily have to have other units having an ion exchange group, and in a case where the cyclic ether structure units in the polymer (H) do not have an ion exchange group, it must have other units having an ion exchange group, such as units based on a perfluoro monomer.

A preferred form of the polymer (H) is the form containing units (u22) from such a viewpoint that the power generation efficiency of the fuel cell will be superior.

A more preferred form of the polymer (H) is the form containing units (u22) and unit (u32) from such a viewpoint that the power generation efficiency of the fuel cell will be particularly excellent.

In the catalyst layer, the content of the polymer (H) is preferably from 50 to 200 parts by mass, more preferably from 60 to 180 parts by mass, particularly preferably from 70 to 140 parts by mass, to 100 parts by mass of the carrier (carbon, etc.) in the catalyst. When the content of the polymer (H) is within the above range, the power generation efficiency of the fuel cell will be further improved.

When the content of the cyclic ether structure units to all units contained in the polymer (H) is M1 [mol%] and the thickness of the solid polymer electrolyte membrane is T1 [µm], the ratio of M1 to T1 (M1/T1) is 4.5 or more.

The upper limit value of the above ratio (M1/T1) is preferably 16.0, particularly preferably 15.6, from the viewpoint of the power generation efficiency.

In a case where the polymer (H) contains units (u22), when the content of units (u22) to all units contained in the polymer (H) is M2 [mol%] and the thickness of the polymer electrolyte membrane is T1 [µm], the ratio of M2 to T1 (M2/T1) is preferably 4.5 or more, from such a viewpoint that the power generation efficiency of the fuel cell will be superior.

The upper limit value of the above ratio (M2/T1) is preferably 16, particularly preferably 15.6, from the viewpoint of the power generation efficiency.

### (Physical Properties)

The ion exchange capacity of the polymer (H) is preferably from 1.1 to 2.8 milliequivalents/g dry resin, more preferably from 1.2 to 2.8 milliequivalents/g dry resin, particularly preferably from 1.2 to 2.3 milliequivalents/g dry resin. When the ion exchange capacity is at least 1.1 milliequivalents/g dry resin, the conductivity of the polymer (H) will be high, whereby when used as a polymer for the catalyst layer of a fuel cell, a sufficient battery output can be obtained. When the ion exchange capacity is at most 2.8 milliequivalents/g dry resin, the synthesis of the polymer will be easy.

The TQ value of the polymer (H) is preferably from 200 to 330°C. The lower limit of the TQ value is more preferably 210°C, from the viewpoint of prevention of electrode cracking. Further, the upper limit of the TQ value is more preferably 310°C, particularly preferably at most 300°C, from the viewpoint of preventing thermal decomposition of the fluororesin. Further, when the TQ value is in this range, the polymer (H) will be excellent also in hot water resistance.

### (Production method for polymer (H))

The polymer (H) is produced, for example, by converting a precursor group for an ion exchange group of a polymer (F) having the precursor group, obtainable by polymerizing a cyclic monomer (preferably a specific cyclic monomer), and at least one of a perfluoromonomer and tetrafluoroethylene to be used as the case requires, to the ion exchange group.

In the following, each monomer which may be used in the production of the polymer (H) will be described.

Units (u11) are obtained by polymerizing a monomer (m11), and as suitable forms of the monomer (m11), monomer (m11-1) to monomer (m11-4) may be mentioned. Further, the monomer (m11) can be synthesized by known methods.

In the formula (m11), R¹¹ to R¹⁶ are, respectively, synonymous with R¹¹ to R¹⁶ in the formula (u11).

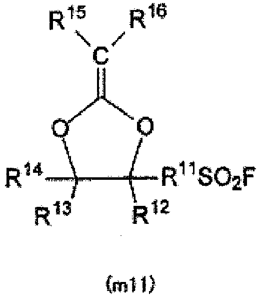

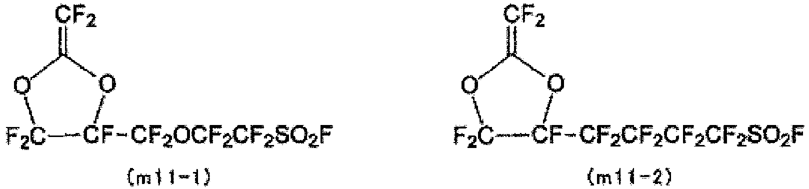

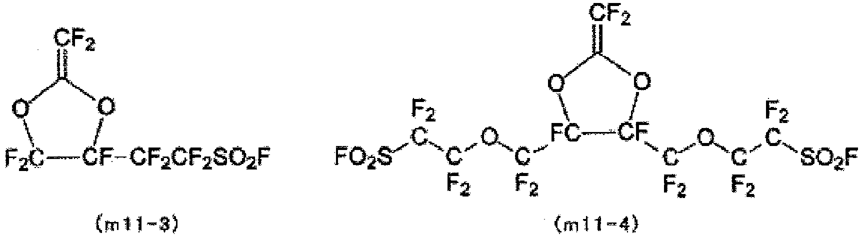

Units (u12) are obtainable by polymerizing a monomer (m12), and as suitable forms of the monomer (m12), monomer (m12-1) and (m12-2) may be mentioned. Further, the monomer (m12) can be synthesized by known methods.

R²¹ and R²² in the formula (m12) are, respectively, synonymous with R²¹ and R²² in the formula (u12).

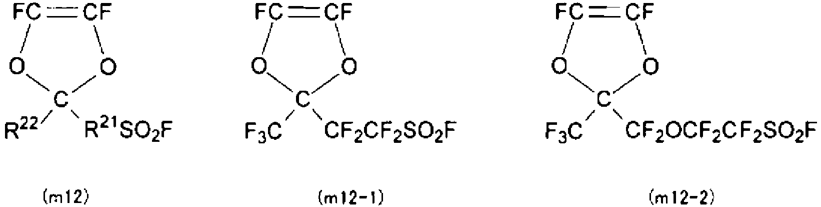

Units (u21) are obtainable by polymerizing a monomer (m21), and as suitable forms of the monomer (m21), monomer (m21-1) and (m21-2) may be mentioned. Further, the monomer (m21) can be synthesized by known methods.

R⁴¹ to R⁴⁶ in the formula (m21) are, respectively, synonymous with R⁴¹ to R⁴⁶ in the formula (u21).

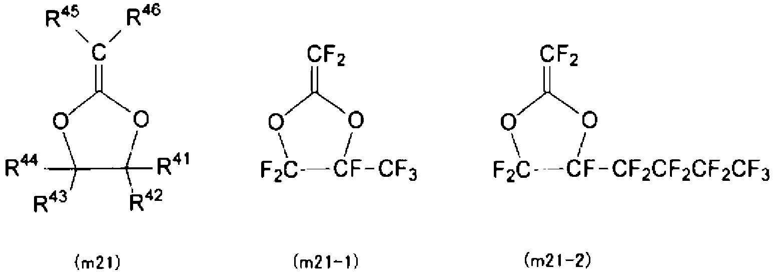

Units (u22) are obtainable by polymerizing a monomer (m22), and as suitable forms of the monomer (m22), monomers (m22-1) to (m22-11) may be mentioned. Further, the monomer (m22) can be synthesized by known methods.

R⁵¹ to R⁵⁵ in the formula (m22) are, respectively, synonymous with R⁵¹ to R⁵⁵ in the formula (u22).

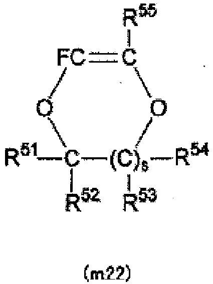

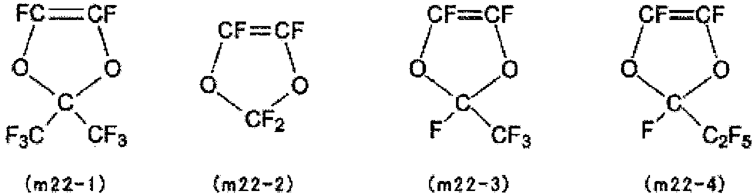

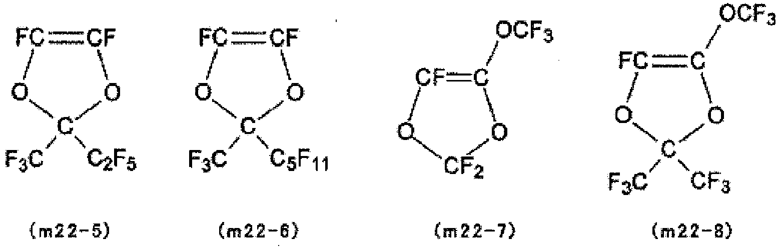

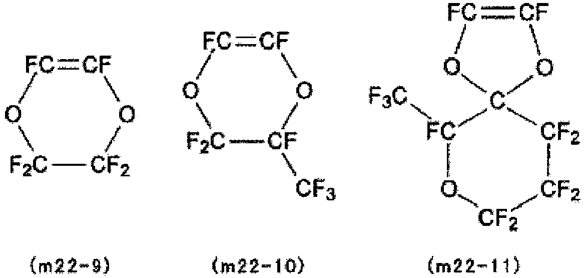

Units (u24) are obtainable by cyclization polymerization of a monomer (m24), and as suitable forms of the monomer (m24), monomers (m24-1) to (m24-3) may be mentioned. Further, the monomer (m24) can be synthesized by known methods.

R⁷¹ to R⁷⁶ in the formula (m24) are, respectively, synonymous with R⁷¹ to R⁷⁶ in the formula (u24).

CF(R⁷¹)=C(R⁷³)-O-CF(R⁷⁶)-CF(R⁷⁵)-C(R⁷⁴)=CF(R⁷²) (m24)

CF₂=CF-O-CF₂-CF₂-CF=CF₂ (m24-1)

CF₂=CF-O-CF₂-CF(CF₃)-CF=CF₂ (m24-2)

CF₂=CF-O-CF(CF₃)-CF₂-CF=CF₂ (m24-3)

For the production of the polymer (H), a perfluoromonomer which does not contain a cyclic ether structure and contains a precursor group for an ion exchange group, may be used.

As the above perfluoromonomer, a monomer (m31) and a monomer (m32) may be mentioned, and from such a viewpoint that the power generation efficiency of the fuel cell will be superior, the monomer (m32) is preferred.

CF₂=CF(CF₂)_{q}(OCF₂CFZ)ₘOₚ(CF₂)ₙSO₂F (m31)

The monomer (m31) corresponds to units (u31).

Z, q, m, p, and n are, respectively, synonymous with Z, q, m, p and n in the formula (u31).

As the monomers (m31), monomers (m31-1) to (m31-4) are preferred.

CF₂=CFO(CF₂)ₙ₁SO₂F (m31-1)

CF₂=CFCF₂O(CF₂)ₙ₄SO₂F (m31-2)

CF₂=CF(OCF₂CF(CF₃))ₘ₃O(CF₂)ₙ₃SO₂F (m31-3)

CF₂=CFOCF₂CF(CF₃)O(CF₂)ₙ₂SO₂F (m31-4)

Here, n1, n2, n3 and n4 are integers of from 1 to 8, and m3 is an integer of from 1 to 3.

The monomer (m31) can be synthesized, for example, by the methods disclosed in Prog. Polym. Sci. Vol. 12, 1986, p. 233 -237; U.S. Patent No. 4330654, etc.

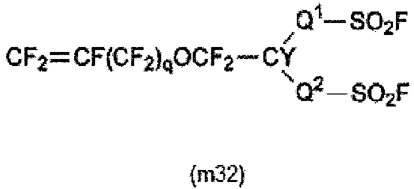

Q¹, Q², Y and q are, respectively, synonymous with Q¹, Q², Y and q in the formula (u32).

The monomer (m32) corresponds to units (u32).

As the monomer (m32), from such a viewpoint that the production of the polymer (H) will be easy and the industrial implementation will be easy, monomers (m32-1) to (m32-3) are preferred, and monomer (m32-1) is particularly preferred.

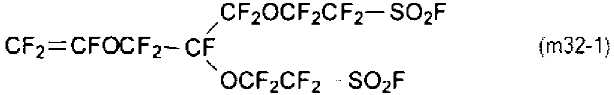

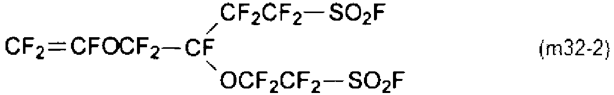

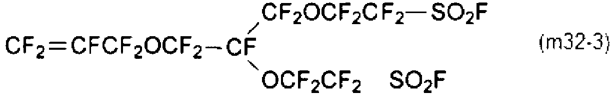

The monomer (m32) can be synthesized, for example, by the methods disclosed in WO2007/013533, JP-A-2008-202039, etc.

For the production of the polymer (H), tetrafluoroethylene may be used.

For the production of the polymer (H), monomers other than those mentioned above may be used. Specific examples of such monomers include perfluoro(3-butenyl vinyl ether), perfluoro(allyl vinyl ether), perfluoroα-olefins (such as hexafluoropropylene) and perfluoro(alkyl vinyl ethers).

An example of the method for converting a precursor group (-SO₂F) for an ion exchange group to the ion exchange group, will be shown below.

As the method for converting the group represented by -SO₂F to a sulfonic acid group (-SO₃⁻H⁺), the following method (i) may be mentioned, and as the method for converting the group represented by -SO₂F to a sulfonimide group (-SO₂N(SO₂R^{f})⁻H⁺), the following method (ii) may be mentioned.
(i) A method of hydrolyzing the group represented by -SO₂F to a sulfonate and acidifying the sulfonate to convert it to a sulfonic acid group.
(ii) A method of imidizing the group represented by -SO₂F to form a salt-type sulfonimide group and further acidifying it to convert it to an acid-type sulfonimide group.

### Method (i):

The hydrolysis is conducted, for example, by bringing a polymer having a precursor for an ion exchange group, and a basic compound, into contact with each other in a solvent. As the basic compound, sodium hydroxide, potassium hydroxide or the like, may be mentioned. As the solvent, water, a mixed solvent of water and a polar solvent, or the like, may be mentioned. As the polar solvent, an alcohol (methanol, ethanol, etc.), dimethyl sulfoxide, or the like, may be mentioned.

The acidification is conducted, for example, by bringing a polymer having a sulfonate into contact with an aqueous solution of hydrochloric acid, sulfuric acid or the like.

The hydrolysis and acidification are usually conducted at from 0 to 120°C.

### Method (ii):

For the imidization, the following methods may be mentioned.
(ii-1) A method of reacting a group represented by -SO₂F, and R^{f}SO₂NHM.
(ii-2) A method of reacting a group represented by -SO₂F and R^{f}SO₂NH₂ in the presence of an alkali metal hydroxide, an alkali metal carbonate, MF, ammonia, or a primary to tertiary amine.
(ii-3) A method of reacting a group represented by -SO₂F and R^{f}SO₂NMSi(CH₃)₃.

Here, M is an alkali metal, or primary to quaternary ammonium.

The acidification is conducted by treating a polymer having a salt form sulfonimide group with an acid (sulfuric acid, nitric acid, hydrochloric acid, etc.).

Further, the polymer (H) in which the ion exchange group is a sulfonimide group, can be produced, also by polymerizing a monomer having a group represented by -SO₂F in a monomer (m11), (m12), (m31) or (m32) converted to a sulfonimide group, and a monomer (m21) or monomer (m22).

The monomer in which the group represented by -SO₂F is converted to a sulfonimide group, can be produced by adding chlorine or bromine to the carbon-carbon double bond of a monomer (m11), (m12), (m31) or (m32) and converting the group represented by -SO₂F to a sulfonimide group by the method (ii), and then conducting a dechlorination or debromination reaction by using metallic zinc.

### (Catalyst)

A catalyst contained in the catalyst layer may, for example, be a supported catalyst having platinum or a platinum alloy supported on a carbon carrier.

Specific examples of the carbon carrier include carbon black powder, graphitized carbon, carbon fibers and carbon nanotubes.

The platinum alloy is preferably an alloy of platinum and at least one type of metal selected from the group consisting of platinum group metals excluding platinum (ruthenium, rhodium, palladium, osmium, iridium), gold, silver, chromium, iron, titanium, manganese, cobalt, nickel, molybdenum, tungsten, aluminum, silicon, zinc and tin.

In a case of using a supported catalyst, the supported amount of the catalyst is, from such a viewpoint that the power generation efficiency of the fuel cell will be superior and from the viewpoint of costs, preferably from 10 to 80 mass%, particularly preferably from 10 to 70 mass%.

In the case of using a supported catalyst, the ratio of the mass of the polymer (H) to the mass of the carrier (content of the polymer (H)/content of the carrier) is, from such a viewpoint that the power generation efficiency of the fuel cell will be superior, preferably from 0.5 to 2.0, particularly preferably from 0.6 to 1.8.

### <Gas diffusion layer>

The gas diffusion layer 12 has a function to diffuse gas uniformly into the catalyst layer 11 and a function as a current collector.

As the gas diffusion layer 12, carbon paper, carbon cloth, carbon felt, etc. may be mentioned. The gas diffusion layer 12 is preferably treated to be water repellent by polytetrafluoroethylene or the like.

Although in the membrane electrode assembly 10 in Fig. 1, a gas diffusion layer 12 is contained, the gas diffusion layer is an optional component and needs not be contained in the membrane electrode assembly.

### <Other components>

The anode 13 and the cathode 14 may have other components other than those mentioned above.

As a specific example of such other components, a carbon layer (not shown) provided between the catalyst layer 11 and the gas diffusion layer 12 may be mentioned. When the carbon layer is disposed, the gas diffusivity of the surface of the catalyst layer 11 will be improved, whereby it is possible to further improve the power generation performance of the fuel cell.

The carbon layer contains, for example, carbon and a nonionic fluorinated polymer. As specific examples of carbon, carbon nanofibers with a fiber diameter of from 1 to 1,000 nm and a fiber length of at most 1,000 µm, are preferred. As a specific example of the nonionic fluorinated polymer, polytetrafluoroethylene may be mentioned.

### <Method for forming catalyst layer>

Forming of the catalyst layer 11 may be carried out by known methods.

### [Solid polymer electrolyte membrane]

The solid polymer electrolyte membrane of the present invention is a membrane containing a polymer (S).

The thickness of the solid polymer electrolyte membrane of the present invention is from 5 to 15 µm. When the thickness of the solid polymer electrolyte membrane is at least 5 µm, at the time of operation of the polymer electrolyte fuel, the durability of the solid polymer electrolyte membrane will be excellent. When the thickness of the solid polymer electrolyte membrane is at most 15 µm, the battery performance of the polymer electrolyte fuel cell will be excellent. The thickness of the solid polymer electrolyte membrane is preferably from 7 to 15 µm.

The thickness of the solid polymer electrolyte membrane is a value measured by observing the cross section of the solid polymer electrolyte membrane by a scanning electron microscope, etc., and means the arithmetic mean value of any optional 10 points.

### <Polymer (S)>

The polymer (S) is a fluorinated polymer having an ion exchange group contained in the solid polymer electrolyte membrane.

The polymer (S) may be any polymer having an ion exchange group and fluorine atoms, but it is preferred to have units based on the above-mentioned perfluoromonomer which may be contained in the polymer (H), from the viewpoint of high chemical durability.

As specific examples of units based on the perfluoromonomer in the polymer (S), units (u31) and units (u32) may be mentioned, and from such a viewpoint that the power generation efficiency in the fuel cell will be superior, units (u32) are particularly preferred.

The content of the units based on the perfluoromonomer is preferably from 5 to 40 mol%, more preferably from 10 to 35 mol%, particularly preferably from 15 to 30 mol%, to all units contained in the polymer (S).

The polymer (S) may contain only one type of units based on the perfluoromonomer, or may contain two or more types. When two or more types are contained, the above content means the total amount of them.

The polymer (S) may further contain units based on tetrafluoroethylene (TFE).

The content of the units based on tetrafluoroethylene is preferably from 50 to 90 mol%, more preferably from 60 to 85 mol%, particularly preferably from 65 to 80 mol%, to all units contained in the polymer (S).

The polymer (S) may contain units other than those mentioned above (hereinafter referred to also as "other units"). Specific examples of such other units are the same as other units in the polymer (H).

The ion exchange capacity of the polymer (S) is preferably from 1.1 to 3.0 milliequivalents/g dry resin, more preferably from 1.2 to 3.0 milliequivalents/g dry resin, particularly preferably from 1.3 to 2.5 milliequivalents/g dry resin.

When the ion exchange capacity is at least the lower limit value in the above range, the ion conductivity of the polymer (S) will be high, so that sufficient battery output can be obtained when the membrane electrode assembly is applied to a polymer electrolyte fuel cell. When the ion exchange capacity is at most the upper limit value in the above range, swelling of the polymer (S) when it becomes hydrated can be suppressed and the mechanical strength of the solid polymer electrolyte membrane will be increased. Flooding of the polymer electrolyte fuel cell can be suppressed.

The ion exchange capacity of the polymer (S) is obtainable by the method described in Examples given later.

The TQ value of the precursor polymer (S) of the polymer (S) is preferably from 200 to 350°C, more preferably from 210 to 340°C, particularly preferably from 220 to 330°C.

When the TQ value is at least the lower limit value in the above range, the polymer (S) will have a sufficient molecular weight and will be excellent also in mechanical strength. When the TQ value is at most the upper limit value in the above range, the solubility or dispersibility of the polymer (S) will be improved, whereby the liquid composition containing the polymer (S) will be easy to prepare.

The TQ value of the precursor polymer (S) is measured by the method described in Examples given later.

### (Production method for polymer (S))

The polymer (S) is produced, for example, by converting a precursor group for an ion exchange group of a polymer obtained by polymerizing a monomer having the precursor group, to an ion exchange group.

Specific examples of the monomer which can be used in the production of the polymer (S) include monomer (m31), monomer (m32), tetrafluoroethylene, perfluoro(3-butenyl vinyl ether), perfluoro(allyl vinyl ether), perfluoroα-olefins (hexafluoropropylene, etc.) and perfluoro(alkyl vinyl ethers), as exemplified in the production method for the polymer (H).

The method of converting the precursor group for an ion exchange group to an ion exchange group is the same as the production method for the polymer (H).

### <Other components>

The solid polymer electrolyte membrane 15 may contain at least one type of atom selected from the group consisting of cerium and manganese to further improve the durability. Cerium and manganese decompose hydrogen peroxide as a substance that causes degradation of the solid polymer electrolyte membrane 15. Cerium and manganese are preferably present in the solid polymer electrolyte membrane 15 as ions, but may also be present as a hardly soluble salt such as cerium oxide.

The solid polymer electrolyte membrane 15 may contain silica or a heteropoly acid (zirconium phosphate, phosphorus molybdate, phosphorus tungstic acid, etc.) as a water retention agent to prevent drying.

The solid polymer electrolyte membrane 15 may be reinforced with a reinforcing material. As the reinforcing material, a porous body, fibers, woven fabrics, non-woven fabrics, etc. may be mentioned. As the material for the reinforcing material, polytetrafluoroethylene, a tetrafluoroethylene-hexafluoropropylene copolymer, a tetrafluoroethylene-perfluoro(alkyl vinyl ether) copolymer, polyethylene, polypropylene, polyphenylene sulfide, etc. may be mentioned.

### <Method for forming solid polymer electrolyte membrane>

The solid polymer electrolyte membrane 15 can be formed, for example, by a method of coating a liquid composition containing the polymer (S) on the substrate film or catalyst layer 11 and drying it (casting method).

The liquid composition is a dispersion having the polymer (S) dispersed in a solvent containing at least one of an organic solvent and water.

### [Production method for membrane electrode assembly]

The membrane electrode assembly 10 is produced, for example, by the following methods.
(i) A method of forming catalyst layers 11 on a solid polymer electrolyte membrane 15 to make a membrane catalyst layer assembly, and sandwiching the membrane catalyst layer assembly between gas diffusion layers 12.
(ii) A method of forming a catalyst layer 11 on a gas diffusion layer 12 to make electrodes (anode 13 and cathode 14) and sandwiching a solid polymer electrolyte membrane 15 between the electrodes.

### [Polymer electrolyte fuel cell]

The polymer electrolyte fuel cell of the present invention comprises the above-described membrane electrode assembly.

The polymer electrolyte fuel cell of the present invention is excellent in the power generation efficiency, since it contains the above-described membrane electrode assembly.

The polymer electrolyte fuel cell of the present invention may have separators having grooves formed on both sides of the membrane electrode assembly that serve as gas flow paths.

Specific examples of separators include metal separators, carbon separators, separators made of a mixture of graphite and resin, and separators made of various conductive materials.

In the polymer electrolyte fuel cell, electricity is generated by supplying gas containing oxygen to the cathode and gas containing hydrogen to the anode.

Further, the above-described membrane electrode assembly can also be applied to a methanol fuel cell in which electricity is generated by supplying methanol to the anode.

### EXAMPLES

In the following, the present invention will be described specifically with reference to Examples, but the present invention is not limited by these Examples. Note that Ex. 1 to 11 are Preparation Examples, Ex. 12 to 14, Ex. 17 to 19, Ex. 21, Ex. 23 to 25, and Ex. 27 to 29 are Examples of the present invention, and Ex. 15 to 16, Ex. 20, Ex. 22, Ex. 26 and Ex. 30 are Comparative Examples.

### [Ion exchange capacity]

The ion exchange capacity of the polymer (H) (polymer after hydrolysis treatment) was obtained by the following method.

The polymer (H) was put in a glove box and left to dry for at least 24 hours in an atmosphere having dry nitrogen permitted to flow. The dry mass of the polymer (H) was measured in the glove box.

The polymer (H) was immersed in a 2 mol/L sodium chloride aqueous solution, left at 60°C for 1 hour, and then cooled to room temperature. The ion exchange capacity of the polymer (H) was obtained by titrating the sodium chloride aqueous solution in which the polymer (H) was immersed with a 0.5 mol/L sodium hydroxide solution.

### [TQ value]

Using a flow tester (manufactured by Shimadzu Corporation, CFT-500D) equipped with a nozzle of 1 mm in length and 1 mm in inner diameter, the polymer (H) was melt extruded by changing the temperature under the condition of an extrusion pressure of 2.94 MPa (gauge pressure). The amount of the polymer (H) extruded was measured by changing the temperature, and the temperature at which the amount of the polymer (H) extruded reached 100 mm³/sec was obtained as the TQ value.

### [Synthesis of monomer (m11-1)]

In accordance with the method disclosed in WO2003/037885, pages 37 to 42, monomer (m11 -1) was synthesized.

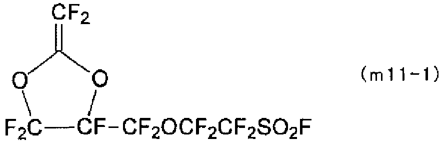

### [Synthesis of monomer (m12-1)]

In accordance with the method disclosed in Ex. 1 of JP-A-2006-152249, monomer (m12-1) was synthesized.

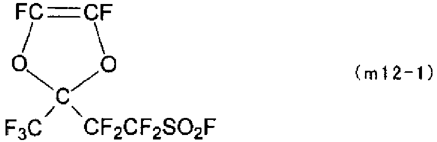

### [Synthesis of monomer (m31-4)]

Monomer (m31-4) was synthesized by a known method.

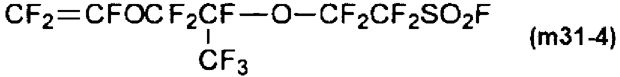

### [Synthesis of monomer (m31-5)]

Monomer (m31-5) was synthesized by a known method.

CF₂=CFOCF₂CF₂SO₂F (m31-5)

### [Synthesis of monomer (m32-1)]

In accordance with the method disclosed in Ex. 1 of JP-A-2008-202039, compound (m32-1) was synthesized.

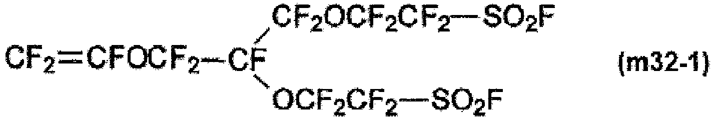

### [Synthesis of monomer (m21-1)]

Monomer (m21-1) was synthesized in accordance with a known method.

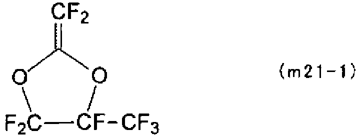

### [Synthesis of monomer (m22-1)]

Monomer (m22-1) was synthesized in accordance with a known method.

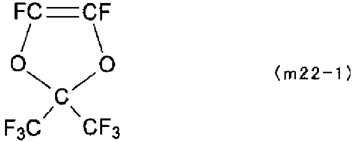

### [Synthesis of monomer (m24-1)]

Monomer (m24-1) was synthesized in accordance with a known method.

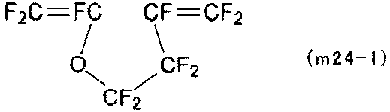

### [Radical polymerization initiators]

The following compounds (i-1) to (i-3) were prepared as radical polymerization initiators.

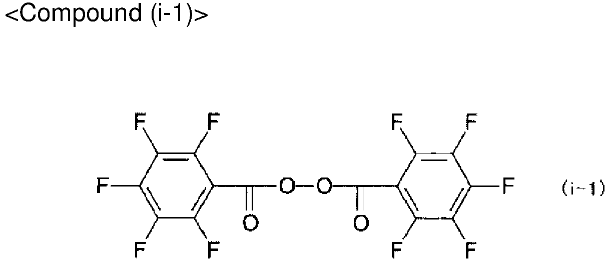

### <Compound (i-2)>

((CH₃)₂CHOCOO)₂ (i-2)

### <Compound (i-3)>

(C₃F₇COO)₂ (i-3)

### [Solvents]

The following compounds (s-1) and (s-2) were prepared as solvents.

### <Compound (s-1)>

CClF₂CF₂CHClF (s-1)

### <Compound (s-2)>

CH₃CCl₂F (s-2)

### [Ex. 1: Preparation Example]

In a stainless steel autoclave with an internal volume of 125 mL, 9.15 g of compound (m22-1), 45.65 g of compound (m32-1) and 6.4 mg of compound (i-2) were charged, and, under cooling with liquid nitrogen, thoroughly degassed. Then, the temperature was raised to 40°C and held for 24.5 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane, and dried under reduced pressure at 80°C overnight to obtain polymer (F-1). The yield was 4.5 g.

The polymer (F-1) was immersed in an aqueous solution containing 20 mass% of methanol and 15 mass% of potassium hydroxide at 50°C for 40 hours, whereby -SO₂F groups in the polymer (F-1) were hydrolyzed and converted to -SO₃K groups. Then, the polymer was immersed in a 3 mol/L hydrochloric acid aqueous solution at room temperature for 2 hours. By changing the hydrochloric acid aqueous solution, the same treatment was repeated four more times to obtain the polymer (H-1) having -SO₃K groups in the polymer converted to sulfonic acid groups. The polymer (H-1) was rinsed thoroughly with ultrapure water. The ion exchange capacity and TQ value of the polymer (H-1) were measured. The results are shown in Table 1.

To the polymer (H-1), a mixed solvent of ethanol and water (ethanol/water = 60/40 by mass ratio) was added, and the solid content concentration was adjusted to 15 mass%, and by using an autoclave, the mixture was stirred at 105°C for 8 hours to obtain a liquid composition (D-1) having the polymer (H-1) dispersed in the dispersant.

### [Ex. 2: Preparation Example].

In a stainless steel autoclave with an internal volume of 230 mL, 32.4 g of compound (m22-1), 166.70 g of compound (m32-1) and 101 mg of compound (i-2) were charged, and under cooling with liquid nitrogen, thoroughly degassed. Thereafter, 3.87 g of tetrafluoroethylene (TFE) was charged, the temperature was raised to 24°C, followed by stirring for 24 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-2). The yield was 45.9 g.

Using the polymer (F-2), polymer (H-2) was obtained in the same manner as in Ex. 1. The ion exchange capacity and TQ value of the polymer (H-2) were measured. The results are shown in Table 1.

Using the polymer (H-2), a liquid composition (D-2) was obtained in the same manner as in Ex. 1.

### [Ex. 3: Preparation Example].

In a stainless steel autoclave with an internal volume of 230 mL, 37.45 g of compound (m22-1), 120.20 g of compound (m32-1) and 25.2 mg of compound (i-2) were charged, and under cooling with liquid nitrogen, thoroughly degassed. Thereafter, 4.39 g of TFE was charged, the temperature was raised to 24°C, followed by stirring for 12 hours and 30 minutes, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-3). The yield was 29.6 g.

Using the polymer (F-3), polymer (H-3) was obtained in the same manner as in Ex. 1. The ion exchange capacity and TQ value of the polymer (H-3) were measured. The results are shown in Table 1.

Using the polymer (H-3), a liquid composition (D-3) was obtained in the same manner as in Ex. 1.

### [Ex. 4: Preparation Example]

In a stainless steel autoclave with an internal volume of 125 mL, 8.50 g of compound (m22-1), 59.5 g of compound (m31-4) and 20.4 mg of compound (i-2) were charged, and under cooling with liquid nitrogen, thoroughly degassed. Thereafter, 2.5 g of TFE was charged, the temperature was raised to 24°C, followed by stirring for 24 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-4). The yield was 11.1 g.

Using the polymer (F-4), polymer (H-4) was obtained in the same manner as in Ex. 1. The ion exchange capacity and TQ value of the polymer (H-4) were measured. The results are shown in Table 1.

Using the polymer (H-4), a liquid composition (D-4) was obtained in the same manner as in Ex. 1.

### [Ex. 5: Preparation Example]

In a stainless steel autoclave with an internal volume of 125 mL, 9.80 g of compound (m22-1), 37.4 g of compound (m31-5) and 14.1 mg of compound (i-2) were charged, and under cooling with liquid nitrogen, thoroughly degassed. Thereafter, 2.5 g of TFE was charged, the temperature was raised to 24°C, followed by stirring for 24 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-5). The yield was 10.5 g.

Using the polymer (F-5), polymer (H-5) was obtained in the same manner as in Ex. 1. The ion exchange capacity and TQ value of the polymer (H-5) were measured. The results are shown in Table 1.

Using the polymer (H-5), a liquid composition (D-5) was obtained in the same manner as in Ex. 1.

### [Ex. 6: Preparation Example]

In a stainless steel autoclave with an internal volume of 125 mL, 3.5 g of compound (m21-1), 76.33 g of compound (m32-1) and 8.5 mg of compound (i-2) were charged and under cooling with liquid nitrogen, thoroughly degassed. Thereafter, the temperature was raised to 40°C, followed by stirring for 24 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-6). The yield was 6.4 g.

Using the polymer (F-6), polymer (H-6) and a liquid composition (D-6) were obtained in the same manner as in Ex. 1. The ion exchange capacity and TQ value of the polymer (H-6) were measured. The results are shown in Table 1.

### [Ex. 7: Preparation Example]

In a stainless steel autoclave with an internal volume of 125 mL, 5.97 g of compound (m11-1), 13.70 g of compound (m22-1) and 17.1 mg of compound (i-1) were charged, and under cooling with liquid nitrogen, thoroughly degassed. Thereafter, the temperature was raised to 65°C and held for 6 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-7). The yield was 3.7 g.

Using the polymer (F-7), polymer (H-7) was obtained in the same manner as in Ex. 1. The ion exchange capacity and TQ value of the polymer (H-7) were measured. The results are shown in Table 1.

To the polymer (H-7), a mixed solvent of ethanol and water (ethanol/water = 60/40 by mass ratio) was added, and the solid concentration was adjusted to 15 mass%, and using an autoclave, the mixture was stirred at 105°C for 8 hours to obtain a liquid composition (D-7) having the polymer (H-7) dispersed in the dispersant.

### [Ex. 8: Preparation Example]

In a stainless steel autoclave with an internal volume of 125 mL, 15.0 g of compound (m22-1), 15.29 g of compound (m12-1), 10.0 g of compound (s-1) and 23 mg of compound (i-1) were charged, and under cooling with liquid nitrogen, thoroughly degassed. Thereafter, the temperature was raised to 65°C, followed by stirring for 18 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-8). The yield was 12.0 g.

Using the polymer (F-8), polymer (H-8) was obtained in the same manner as in Ex. 1. The ion exchange capacity and TQ value of the polymer (H-8) were measured. The results are shown in Table 1.

Using the polymer (H-8), a liquid composition (D-8) was obtained in the same manner as in Ex. 1.

### [Ex. 9: Preparation Example]

In a stainless steel autoclave with an internal volume of 230 mL, 21.2 g of compound (m11-1), 170 g of compound (s-1) and 9.5 mg of compound (i-2) were charged, and under cooling with liquid nitrogen, thoroughly degassed. Thereafter, 20 g of TFE was charged, the temperature was raised to 40°C, followed by stirring for 7 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-9). The yield was 11.5 g.

Using the polymer (F-9), in the same manner as in Ex. 1, polymer (H-9) and a liquid composition (D-9) were obtained. Further, the ion exchange capacity and TQ value of the polymer (H-9) were measured. The results are shown in Table 1.

### [Ex. 10: Preparation Example]

In a stainless steel autoclave with an internal volume of 125 mL, 41.7 g of compound (m24-1), 31.3 g of (m32-1) and 25.0 mg of compound (i-3) dissolved in compound (s-1) at a concentration of 3.2 mass%, were charged and under cooling with liquid nitrogen, thoroughly degassed. Thereafter, the temperature was raised to 20°C, followed by stirring for 20 hours, whereupon the autoclave was cooled to stop the reaction.

After diluting the product with compound (s-1), n-hexane was added thereto, and the polymer was agglomerated and filtered. Thereafter, the polymer was stirred in compound (s-1), re-agglomerated with n-hexane and dried under reduced pressure at 80°C overnight to obtain polymer (F-10). The yield was 5.9 g.

Using the polymer (F-10), in the same manner as in Ex. 1, polymer (H-10) and a liquid composition (D-10) were obtained. The ion exchange capacity and TQ value of the polymer (H-10) were measured. The results are shown in Table 1.

### [Ex. 11: Preparation Example]

In a stainless steel autoclave with an internal volume of 125 mL, 49.64 g of compound (m31-4), 28.22 g of compound (s-1) and 38.9 mg of compound (i-3) dissolved in compound (s-1) at a concentration of 3.2 mass%, were charged, and under cooling with liquid nitrogen, thoroughly degassed. Thereafter, the temperature was raised to 30°C, TFE was introduced into the system, and the pressure was maintained at 0.37 MPaG. After stirring for 4.8 hours, the autoclave was cooled to stop the reaction.

After diluting the product with compound (s-1), compound (s-2) was added thereto, and the polymer was agglomerated and filtered. Thereafter, the polymer was stirred in compound (s-1), re-agglomerated with compound (s-2) and dried under reduced pressure at 80°C overnight to obtain polymer (F-11). The yield was 15.0 g.

Using the polymer (F-11), in the same manner as in Ex. 1, polymer (H-11) and a liquid composition (D-11) were obtained. Further, the ion exchange capacity and TQ value of the polymer (H-11) were measured. The results are shown in Table 1.

**[Table1]**

| | Type of monomer | | | Total of contents of specific cyclic ether structure units in polymer after hydrolysis treatment (mol%) | Polymer | | | Liquid composition | Ion exchange capacity of polymer after hydrolysis treatment |
|---|---|---|---|---|---|---|---|---|---|
| | | | | | Before hydrolysis treatment | After hydrolysis treatment | | | |
| | | | | | | Type | TQ value (°C) | | milliequivalents/g dry resin |
| Ex. 1 | m22-1 | m32-1 | - | 78 | F-1 | H-1 | 250 | D-1 | 1.34 |
| Ex. 2 | m22-1 | m32-1 | TFE | 67 | F-2 | H-2 | 245 | D-2 | 1.49 |
| Ex. 3 | m22-1 | m32-1 | TFE | 75 | F-3 | H-3 | 280 | D-3 | 1.10 |
| Ex. 4 | m22-1 | m31-4 | TFE | 43 | F-4 | H-4 | 220 | D-4 | 1.15 |
| Ex. 5 | m22-1 | m31-5 | TFE | 50 | F-5 | H-5 | 270 | D-5 | 1.15 |
| Ex. 6 | m21-1 | m32-1 | - | 78 | F-6 | H-6 | 210 | D-6 | 1.35 |
| Ex. 7 | m22-1 | m11-1 | - | 100 | F-7 | H-7 | 235 | D-7 | 1.68 |
| Ex. 8 | m22-1 | m12-1 | - | 100 | F-8 | H-8 | 295 | D-8 | 1.41 |
| Ex. 9 | m11-1 | TFE | - | 38.5 | F-9 | H-9 | 280 | D-9 | 1.71 |
| Ex. 10 | m24-1 | m32-1 | - | 74 | F-10 | H-10 | 200 | D-10 | 1.41 |
| Ex. 11 | m31-4 | TFE | - | 0 | F-11 | H-11 | 220 | D-11 | 1.10 |

### [Ex. 12]

To a mixture of 42 g of water and 36 g of ethanol, 67g of the liquid composition (D-1) was added, and while stirring with a stirrer, 20 g of a catalyst was added to adjust the solid content concentration to be 22 mass%, to obtain a liquid for forming the catalyst layer. In a case where heat generation during stirring was large, the stirring was conducted while cooling with a chiller or the like. This liquid was applied to a separately prepared sheet made of a copolymer of ethylene and TFE (product name: Aflex 100N, manufactured by AGC Inc., 100 µm thick) (hereinafter referred to as ETFE sheet), dried at 80°C for 30 minutes, and further subjected to heat-treatment at 160°C for 30 minutes to form a catalyst layer.

TFE and the above monomer (m32-1) were copolymerized to obtain polymer (S'-1) (ion exchange capacity: 1.95 milliequivalents/g dry resin, TQ value: 236°C).

The polymer (S'-1) was molded by a melt-extrusion method to obtain a membrane (thickness: 200 µm) consisting of the polymer (S'-1).

Here, the ion exchange capacity shown in parentheses for the polymer (S'-1) represents the ion exchange capacity of the polymer obtainable at the time of being hydrolyzed in the procedure described later.

By immersing the membrane in an aqueous solution containing 20 mass% of potassium hydroxide for 16 hours, the -SO₂F groups in the polymer (S'-1) were hydrolyzed and converted to -SO₃K groups. The membrane was immersed in a 3 mol/L hydrochloric acid aqueous solution for 2 hours. The hydrochloric acid aqueous solution was replaced and the same process was repeated four more times to convert the -SO₃K groups in the polymer to sulfonic acid groups to obtain the membrane-form polymer (S-1).

Using the polymer (S-1), a dispersion having the solid content dispersed in a water/ethanol = 50/50 (mass %) solvent at a solid content concentration of 13% (hereinafter referred to also as "dispersion Y1") was obtained.

This dispersion Y1 was applied to an ETFE sheet by a die coater, dried at 80°C for 30 minutes, and then heat-treated at 190°C for 30 minutes, to form a solid polymer electrolyte membrane with a thickness of 15 µm.

After peeling off the ETFE sheet from the solid polymer electrolyte membrane, the solid polymer electrolyte membrane was sandwiched between two sheets of catalyst layers provided with ETFE sheets, followed by heat pressing under conditions of a pressing temperature of 160°C, a pressing time of 5 minutes and a pressure of 3MPa, to bond the catalyst layers to both sides of the polymer electrolyte membrane, and the ETFE sheets were peeled off from the catalyst layers, to obtain a membrane-catalyst-layer assembly with an electrode area of 25 cm².

A carbon layer made of carbon and polytetrafluoroethylene was formed on a gas diffusion layer made of carbon paper.

The membrane-catalyst layer assembly was sandwiched between the gas diffusion layers so that the carbon layer and the catalyst layer were in contact with each other to obtain a membrane electrode assembly.

### [Ex. 13 to 22]

Membrane electrode assemblies were prepared in the same manner as in Ex. 12, except that the liquid composition (D-1) used to form the catalyst layer was changed to liquid compositions (D-2) to (D-11), respectively.

### [Evaluation test]

### <Power generation efficiency>

Each of the membrane electrode assemblies in Ex. 12 to 22 obtained was assembled into a cell for power generation, and the following power generation efficiency evaluation was conducted.

The temperature of the membrane electrode assembly was maintained at 80°C, and hydrogen (utilization 70%) and air (utilization 50%) were pressurized to 150 kPa (absolute pressure) and supplied to the anode and cathode, respectively. Both hydrogen and air were supplied as humidified to 100% RH relative humidity, and the cell voltage at the time when the current density was 0.5 A/cm² was recorded. The value of the cell voltage at the time of using the membrane electrode assembly in Ex. 22 was standardized to be "1.0", and the relative ratio of the cell voltage at the time of using the membrane electrode assembly of each Ex. to that value was calculated. The results are shown in Table 2.

**[Table2]**

| | Type of liquid composition used to form catalyst layer | M1/T1 | M2/T1 | Power generation efficiency |
|---|---|---|---|---|
| Ex. 12 | D-1 | 5.2 | 5.2 | 1.6 |
| Ex. 13 | D-2 | 4.5 | 4.5 | 1.6 |
| Ex. 14 | D-3 | 5.0 | 5.0 | 1.6 |
| Ex. 15 | D-4 | 2.9 | 2.9 | 1.1 |
| Ex. 16 | D-5 | 3.3 | 3.3 | 1.1 |
| Ex. 17 | D-6 | 5.2 | 0 | 1.4 |
| Ex. 18 | D-7 | 6.7 | 2.7 | 1.2 |
| Ex. 19 | D-8 | 6.7 | 3.9 | 1.2 |
| Ex. 20 | D-9 | 2.6 | 0 | 1.1 |
| Ex. 21 | D-10 | 4.9 | 0 | 1.4 |
| Ex. 22 | D-11 | 0 | 0 | 1.0 |

### [Ex. 23]

A membrane electrode assembly was prepared in the same manner as in Ex. 12, except that the thickness of the solid polymer electrolyte membrane was changed to 10 µm.

### [Ex. 24 to 26]

Membrane electrode assemblies were prepared in the same manner as in Ex. 23, except that the liquid composition (D-1) used to form the catalyst layer was changed to the liquid composition disclosed in Table 3.

### [Evaluation test]

### <Power generation efficiency>

The evaluation of the power generation efficiency was conducted in the same manner as the evaluation of the power generation efficiency in Ex. 12 to 22, except that each of the membrane electrode assemblies in Ex. 23 to 26 obtained, was used.

However, the value of the cell voltage at the time of using the membrane electrode assembly in Ex. 26 was standardized to be "1.0", and the relative ratio of the cell voltage at the time of using the membrane electrode assembly in each Ex. to that value was calculated. The results are shown in Table 3.

**[Table3]**

| | Type of liquid composition used to form catalyst layer | M1/T1 | M2/T1 | Power generation efficiency |
|---|---|---|---|---|
| Ex. 23 | D-1 | 7.8 | 7.8 | 1.6 |
| Ex. 24 | D-2 | 6.7 | 6.7 | 1.6 |
| Ex. 25 | D-3 | 7.5 | 7.5 | 1.6 |
| Ex. 26 | D-11 | 0 | 0 | 1.0 |

### [Ex. 27]

A membrane electrode assembly was prepared in the same manner as in Ex. 12, except that the thickness of the solid polymer electrolyte membrane was changed to 5 µm.

### [Ex. 28 to 30]

Membrane electrode assemblies were prepared in the same manner as in Ex. 27, except that the liquid composition (D-1) used to form the catalyst layer was changed to the liquid compositions as disclosed in Table 4.

### [Evaluation test]

### <Power generation efficiency>

The evaluation of the power generation efficiency was conducted in the same manner as in the evaluation of the power generation efficiency in Ex. 12 to 22, except that each of the membrane electrode assemblies in Ex. 27 to 30 obtained, was used.

However, the value of the cell voltage at the time of using the membrane electrode assembly in Ex. 30 was standardized to be "1.0", and the relative ratio of the cell voltage at the time of using the membrane electrode assembly in each Ex. to that value was calculated. The results are shown in Table 4.

**[Table4]**

| | Type of liquid composition used to form catalyst layer | M1/T1 | M2/T1 | Power generation efficiency |
|---|---|---|---|---|
| Ex. 27 | D-1 | 15.6 | 15.6 | 1.6 |
| Ex. 28 | D-2 | 13.4 | 13.4 | 1.6 |
| Ex. 29 | D-3 | 15.0 | 15.0 | 1.6 |
| Ex. 30 | D-11 | 0 | 0 | 1.0 |

As shown in Tables 2 to 4, it has been shown that if a membrane electrode assembly having a solid polymer electrolyte membrane thickness of from 5 to 15 µm and M1/T1 being at least 4.5, is used, it is possible to obtain a fuel cell excellent in the power generation efficiency (Ex. 12 to 14, Ex. 17 to 19, Ex. 21, Ex. 23 to 25 and Ex. 27 to 29).

### REFERENCE SYMBOLS

10: Membrane electrode assembly
11: Catalyst layer
12: Gas diffusion layer
13: Anode
14: Cathode
15: Solid polymer electrolyte membranes

## Claims

1. A membrane electrode assembly comprising an anode having a catalyst layer containing a proton-conducting polymer and a catalyst, a cathode having a catalyst layer containing a proton-conducting polymer and a catalyst, and a solid polymer electrolyte membrane disposed between said anode and said cathode, wherein
said proton-conducting polymer in said catalyst layer of at least one of said anode and said cathode is a polymer (H) having units containing a cyclic ether structure and having an ion exchange group;
said solid polymer electrolyte membrane contains a fluorinated polymer (S) having an ion exchange group;
the thickness of said solid polymer electrolyte membrane is from 5 to 15 µm; and
when the content of said units containing a cyclic ether structure to all units contained in said polymer (H) is M1 [mol%], and the thickness of said solid polymer electrolyte membrane is T1 [µm], the ratio of said M1 to said T1 (M1/T1) is 4.5 or more.

2. The membrane electrode assembly according to Claim 1, wherein the content of said units containing a cyclic ether structure is from 50 to 80 mol% to all units contained in said polymer (H).

3. The membrane electrode assembly according to Claim 1 or 2, wherein said units containing a cyclic ether structure are at least one type of units selected from the group consisting of units represented by the formula (u11), units represented by the formula (u12), units represented by the formula (u21), units represented by the formula (u22) and units represented by the formula (u24): 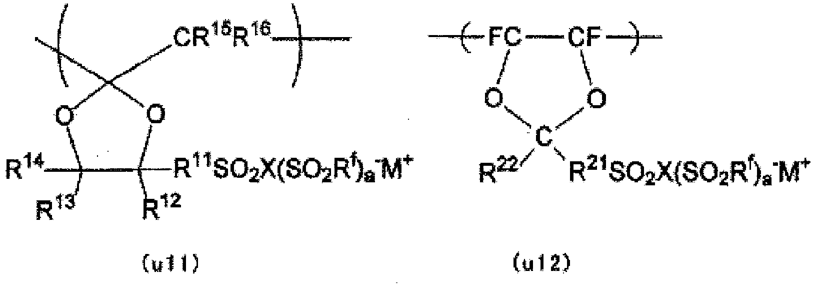 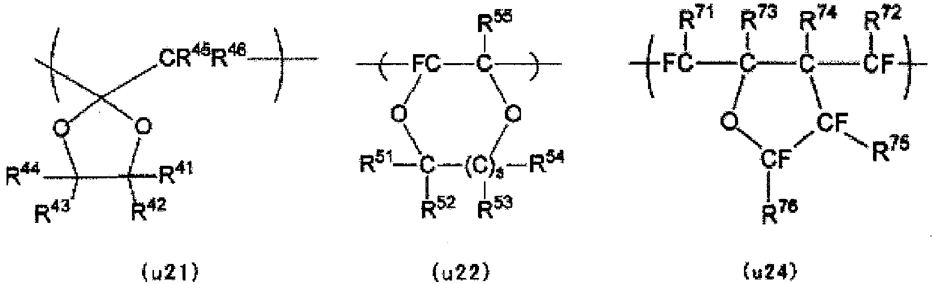
in the formula (u11), R¹¹ is a divalent perfluoroalkylene group which may have an ether-bonding oxygen atom, R¹², R¹³, R¹⁵ and R¹⁶ are each independently a monovalent perfluoroalkyl group which may have an ether-bonding oxygen atom, or a fluorine atom, and R¹⁴ is a monovalent perfluoroalkyl group which may have an ether-bonding oxygen atom, a fluorine atom or -R¹¹(SO₂X(SO₂R^{f})ₐ)⁻M⁺, where M⁺ is H⁺, a monovalent metal cation, or an ammonium ion in which at least one hydrogen atom may be substituted by a hydrocarbon group, R^{f} is a linear or branched perfluoroalkyl group which may have an ether-bonding oxygen atom, X is an oxygen atom, a nitrogen atom or a carbon atom, and when X is an oxygen atom, a = 0, when X is a nitrogen atom, a = 1, and when X is a carbon atom, a = 2;
in the formula (u12), R²¹ is a C₁₋₆ perfluoroalkylene group or a C₂₋₆ perfluoroalkylene group having an ether-bonding oxygen atom between carbon-carbon bonds, R²² is a fluorine atom, a C₁₋₆ perfluoroalkyl group, a C₂₋₆ perfluoroalkyl group having an ether-bonding oxygen atom between carbon-carbon bonds, or a group represented by -R²¹(SO₂X(SO₂R^{f})ₐ)⁻M⁺, where M⁺, R^{f}, X and a are the same as defined above;
in the formula (u21), R⁴¹, R⁴², R⁴³, R⁴⁴, R⁴⁵ and R⁴⁶ are each independently a monovalent perfluoroalkyl group which may have an ether-bonding oxygen atom, or a fluorine atom;
in the formula (u22), s is 0 or 1, R⁵¹ and R⁵² are each independently a fluorine atom, a C₁₋₅ perfluoroalkyl group, or a spiro ring formed by linking each other (provided that s is 0), R⁵³ and R⁵⁴ are each independently a fluorine atom or a C₁₋₅ perfluoroalkyl group, and R⁵⁵ is a fluorine atom, a C₁₋₅ perfluoroalkyl group or a C₁₋₅ perfluoroalkoxy group; and
in the formula (u24), R⁷¹, R⁷², R⁷³, R⁷⁴, R⁷⁵ and R⁷⁶ are each independently a monovalent perfluoroalkyl group which may have an ether-bonding oxygen atom, or a fluorine atom.

4. The membrane electrode assembly according to Claim 3, wherein said units containing a cyclic ether structure include units represented by said formula (u22).

5. The membrane electrode assembly according to Claim 4, wherein when the content of said formula (u22) to all units contained in said polymer (H) is M2 [mol%], the ratio of said M2 to said T1 (M2/T1) is 4.5 or more.

6. The membrane electrode assembly according to any one of Claims 1 to 5, wherein said polymer (H) further has units based on a perfluoromonomer, and said units based on a perfluoromonomer are units which do not contain a cyclic ether structure and have an ion exchange group.

7. The membrane electrode assembly according to Claim 6, wherein said units based on a perfluoromonomer are units represented by the formula (u32): 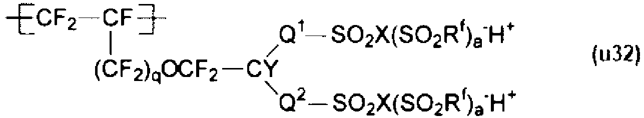 in the formula (u32), Q¹ is a perfluoroalkylene group which may have an ether-bonding oxygen atom, Q² is a single bond, or a perfluoroalkylene group which may have an ether-bonding oxygen atom, Y is a fluorine atom or a monovalent perfluoroalkyl group, q is 0 or 1, R^{f} are, if two or more, each independently a linear or branched perfluoroalkyl group which may have an ether-bonding oxygen atom, a plurality of X are each independently an oxygen atom, a nitrogen atom or a carbon atom, and when X is an oxygen atom, a = 0, when X is a nitrogen atom, a = 1, and when X is a carbon atom, a = 2.

8. The membrane electrode assembly according to any one of Claims 1 to 7, wherein said fluorinated polymer (S) has at least one of units represented by the formula (u31) and units represented by the formula (u32): 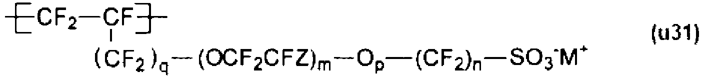 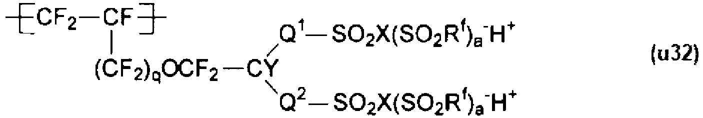
in the formula (u31), Z is a fluorine atom or a trifluoromethyl group, q is 0 or 1, m is an integer of from 0 to 3, p is 0 or 1, n is an integer of from 1 to 12, m+p>0, M⁺ is H⁺, a monovalent metal cation, or an ammonium ion in which at least one hydrogen atom may be substituted by a hydrocarbon group;
in the formula (u32), Q¹ is a perfluoroalkylene group which may have an ether-bonding oxygen atom, Q² is a single bond or a perfluoroalkylene group which may have an ether-bonding oxygen atom, Y is a fluorine atom, or a monovalent perfluoroalkylene group which may have an ether-bonding oxygen atom, q is 0 or 1, R^{f} are, if two or more, each independently a linear or branched perfluoroalkyl group which may have an ether-bonding oxygen atom, and a plurality of X are each independently an oxygen atom, a nitrogen atom or a carbon atom, and when X is an oxygen atom, a = 0, when X is a nitrogen atom, a = 1, and when X is a carbon atom, a = 2.

9. The membrane electrode assembly according to any one of Claims 1 to 8, wherein the ion exchange group which said polymer (H) has, is a group represented by the formula (g1):
-(SO₂X(SO₂R^{f})ₐ)⁻M⁺ (g1)
in the formula (g1), M⁺ is H⁺, a monovalent metal cation, or an ammonium ion in which at least one hydrogen atom may be substituted by a hydrocarbon group, R^{f} are, if two or more, each independently a linear or branched perfluoroalkyl group which may have an ether-bonding oxygen atom, and a plurality of X are each independently an oxygen atom, a nitrogen atom or a carbon atom, and when X is an oxygen atom, a = 0, when X is a nitrogen atom, a = 1, and when X is a carbon atom, a = 2.

10. The membrane electrode assembly according to any one of Claims 1 to 9,
wherein the ion exchange capacity of the polymer (H) is from 1.1 to 2.8 milliequivalents/g.

11. The membrane electrode assembly according to any one of Claims 1 to 10, wherein the TQ value of the polymer (H) is from 200 to 330°C, determined as described in the description.

12. The membrane electrode assembly according to any one of Claims 1 to 11, which is suitable for a polymer electrolyte fuel cell.

13. A polymer electrolyte fuel cell comprising a membrane electrode assembly as claimed in any one of Claims 1 to 12.

## Patentansprüche

1. Membranelektrodenanordnung, umfassend eine Anode mit einer Katalysatorschicht, die ein protonenleitendes Polymer und einen Katalysator enthält, eine Kathode mit einer Katalysatorschicht, die ein protonenleitendes Polymer und einen Katalysator enthält, und eine Feststoffpolymerelektrolytmembran, die zwischen der Anode und der Kathode angeordnet ist, wobei
das protonenleitende Polymer in der Katalysatorschicht mindestens einer der Anode und der Kathode ein Polymer (H) ist, das Einheiten, die eine cyclische Etherstruktur enthalten, und eine Ionenaustauschgruppe aufweist;
die Feststoffpolymerelektrolytmembran ein fluoriertes Polymer (S) mit einer Ionenaustauschgruppe enthält;
die Dicke der Feststoffpolymerelektrolytmembran von 5 bis 15 µm beträgt; und wenn der Gehalt der Einheiten, die eine cyclische Etherstruktur enthalten, an allen in dem Polymer (H) enthaltenen Einheiten M1 [mol%] beträgt und die Dicke der Feststoffpolymerelektrolytmembran T1 [µm] beträgt, das Verhältnis von diesem M1 zu diesem T1 (M1/T1) 4,5 oder mehr beträgt.

2. Membranelektrodenanordnung nach Anspruch 1, wobei der Gehalt der Einheiten, die eine cyclische Etherstruktur enthalten, von 50 bis 80 mol% an allen in dem Polymer (H) enthaltenen Einheiten beträgt.

3. Membranelektrodenanordnung nach Anspruch 1 oder 2, wobei die Einheiten, die eine cyclische Etherstruktur enthalten, mindestens ein Typ von Einheiten sind, ausgewählt aus der Gruppe, bestehend aus Einheiten, dargestellt durch die Formel (u11), Einheiten, dargestellt durch die Formel (u12), Einheiten, dargestellt durch die Formel (u21), Einheiten, dargestellt durch die Formel (u22), und Einheiten, dargestellt durch die Formel (u24): 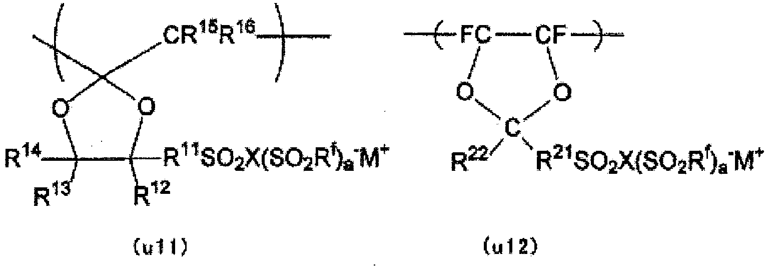 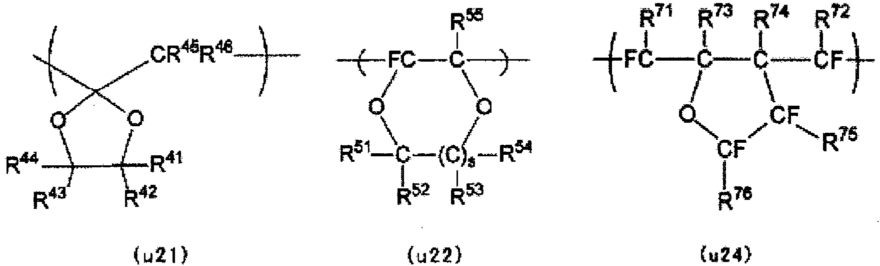
wobei in der Formel (u11) R¹¹ eine zweiwertige Perfluoralkylengruppe ist, die ein etherbindendes Sauerstoffatom aufweisen kann, R¹², R¹³, R¹⁵ und R¹⁶ jeweils unabhängig voneinander eine einwertige Perfluoralkylgruppe, die ein etherbindendes Sauerstoffatom aufweisen kann, oder ein Fluoratom sind und R¹⁴ eine einwertige Perfluoralkylgruppe, die ein etherbindendes Sauerstoffatom aufweisen kann, ein Fluoratom oder -R¹¹(SO₂X(SO₂R^{f})ₐ)⁻M⁺ ist, wobei M⁺ H⁺, ein einwertiges Metallkation oder ein Ammoniumion, in dem mindestens ein Wasserstoffatom durch eine Kohlenwasserstoffgruppe substituiert sein kann, ist, R^{f} eine lineare oder verzweigte Perfluoralkylgruppe, die ein etherbindendes Sauerstoffatom aufweisen kann, ist, X ein Sauerstoffatom, ein Stickstoffatom oder ein Kohlenstoffatom ist und wenn X ein Sauerstoffatom ist, a = 0 ist, wenn X ein Stickstoffatom ist, a = 1 ist und wenn X ein Kohlenstoffatom ist, a = 2 ist; in der Formel (u12) R²¹ eine C₁₋₆-Perfluoralkylengruppe oder eine C₂₋₆-Perfluoralkylengruppe mit einem etherbindenden Sauerstoffatom zwischen Kohlenstoff-Kohlenstoff-Bindungen ist, R²² ein Fluoratom, eine C₁₋₆-Perfluoralkylgruppe, eine C₂₋₆-Perfluoralkylgruppe mit einem etherbindenden Sauerstoffatom zwischen Kohlenstoff-Kohlenstoff-Bindungen oder eine Gruppe, dargestellt durch -R²¹(SO₂X(SO₂R^{f})ₐ)⁻M⁺ ist, wobei M⁺, R^{f}, X und a wie oben definiert sind;
in der Formel (u21) R⁴¹, R⁴², R⁴³, R⁴⁴, R⁴⁵ und R⁴⁶ jeweils unabhängig voneinander eine einwertige Perfluoralkylgruppe, die ein etherbindendes Sauerstoffatom aufweisen kann, oder ein Fluoratom sind;
in der Formel (u22) s 0 oder 1 ist, R⁵¹ und R⁵² jeweils unabhängig voneinander ein Fluoratom, eine C₁₋₅-Perfluoralkylgruppe oder ein durch Verbindung miteinander gebildeter Spiro-Ring (vorausgesetzt, dass s 0 ist) sind, R⁵³ und R⁵⁴ jeweils unabhängig voneinander ein Fluoratom oder eine C₁₋₅-Perfluoralkylgruppe sind und R⁵⁵ ein Fluoratom, eine C₁₋₅-Perfluoralkylgruppe oder eine C₁₋₅-Perfluoralkoxygruppe ist; und
in der Formel (u24) R⁷¹, R⁷², R⁷³, R⁷⁴, R⁷⁵ und R⁷⁶ jeweils unabhängig voneinander eine einwertige Perfluoralkylgruppe, die ein etherbindendes Sauerstoffatom aufweisen kann, oder ein Fluoratom sind.

4. Membranelektrodenanordnung nach Anspruch 3, wobei die Einheiten, die eine cyclische Etherstruktur enthalten, Einheiten, dargestellt durch die Formel (u22), einschließen.

5. Membranelektrodenanordnung nach Anspruch 4, wobei, wenn der Gehalt der Formel (u22) an allen in dem Polymer (H) enthaltenen Einheiten M2 [mol-%] beträgt, das Verhältnis von diesem M2 zu diesem T1 (M2/T1) 4,5 oder mehr beträgt.

6. Membranelektrodenanordnung nach einem der Ansprüche 1 bis 5, wobei das Polymer (H) ferner Einheiten auf Basis eines Perfluoromonomers aufweist und die Einheiten auf Basis eines Perfluoromonomers Einheiten sind, die keine cyclische Etherstruktur enthalten und eine Ionenaustauschgruppe aufweisen.

7. Membranelektrodenanordnung nach Anspruch 6, wobei die Einheiten auf Basis eines Perfluoromonomers Einheiten sind, dargestellt durch die Formel (u32): 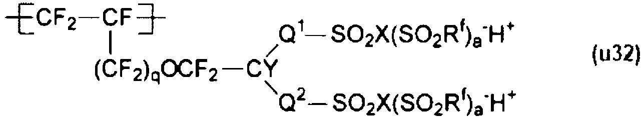 wobei in der Formel (u32) Q¹ eine Perfluoralkylengruppe ist, die ein etherbindendes Sauerstoffatom aufweisen kann, Q² eine Einfachbindung oder eine Perfluoralkylengruppe, die ein etherbindendes Sauerstoffatom aufweisen kann, ist, Y ein Fluoratom oder eine einwertige Perfluoralkylgruppe ist, q 0 oder 1 ist, R^{f}, wenn es zwei oder mehr sind, jeweils unabhängig voneinander eine lineare oder verzweigte Perfluoralkylgruppe, die ein etherbindendes Sauerstoffatom aufweisen kann, sind, eine Mehrzahl von X jeweils unabhängig voneinander ein Sauerstoffatom, ein Stickstoffatom oder ein Kohlenstoffatom sind und wenn X ein Sauerstoffatom ist, a = 0 ist, wenn X ein Stickstoffatom ist, a = 1 ist und wenn X ein Kohlenstoffatom ist, a = 2 ist.

8. Membranelektrodenanordnung nach einem der Ansprüche 1 bis 7, wobei das fluorierte Polymer (S) mindestens eine von Einheiten, dargestellt durch die Formel (u31), und Einheiten, dargestellt durch die Formel (u32), aufweist: 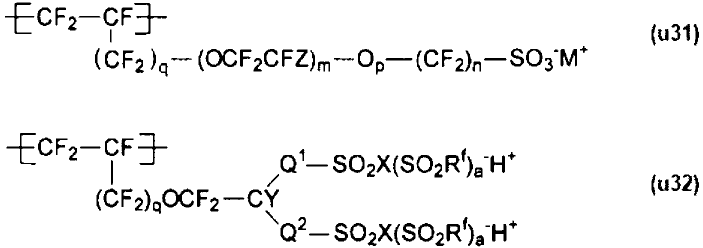
wobei in der Formel (u31) Z ein Fluoratom oder eine Trifluormethylgruppe ist, q 0 oder 1 ist, m eine ganze Zahl von 0 bis 3 ist, p 0 oder 1 ist, n eine ganze Zahl von 1 bis 12 ist, m+p>0 ist, M⁺ H⁺, ein einwertiges Metallkation oder ein Ammoniumion, in dem mindestens ein Wasserstoffatom durch eine Kohlenwasserstoffgruppe substituiert sein kann, ist;
in der Formel (u32) Q¹ eine Perfluoralkylengruppe, die ein etherbindendes Sauerstoffatom aufweisen kann, ist, Q² eine Einfachbindung oder eine Perfluoralkylengruppe, die ein etherbindendes Sauerstoffatom aufweisen kann, ist, Y ein Fluoratom oder eine einwertige Perfluoralkylengruppe, die ein etherbindendes Sauerstoffatom aufweisen kann, ist, q 0 oder 1 ist, R^{f}, wenn es zwei oder mehr sind, jeweils unabhängig voneinander eine lineare oder verzweigte Perfluoralkylgruppe, die ein etherbindendes Sauerstoffatom aufweisen kann, sind und eine Mehrzahl von X jeweils unabhängig voneinander ein Sauerstoffatom, ein Stickstoffatom oder ein Kohlenstoffatom sind und wenn X ein Sauerstoffatom ist, a = 0 ist, wenn X ein Stickstoffatom ist, a = 1 ist und wenn X ein Kohlenstoffatom ist, a = 2 ist.

9. Membranelektrodenanordnung nach einem der Ansprüche 1 bis 8, wobei die Ionenaustauschgruppe, die das Polymer (H) aufweist, eine Gruppe ist, dargestellt durch die Formel (g1):
-(SO₂X(SO₂R^{f})ₐ)⁻M⁺ (g1)
wobei in der Formel (g1) M⁺ H⁺, ein einwertiges Metallkation oder ein Ammoniumion, in dem mindestens ein Wasserstoffatom durch eine Kohlenwasserstoffgruppe substituiert sein kann, ist, R^{f}, wenn es zwei oder mehr sind, jeweils unabhängig voneinander eine lineare oder verzweigte Perfluoralkylgruppe, die ein etherbindendes Sauerstoffatom aufweisen kann, sind und eine Mehrzahl von X jeweils unabhängig voneinander ein Sauerstoffatom, ein Stickstoffatom oder ein Kohlenstoffatom sind und wenn X ein Sauerstoffatom ist, a = 0 ist, wenn X ein Stickstoffatom ist, a = 1 ist und wenn X ein Kohlenstoffatom ist, a = 2 ist.

10. Membranelektrodenanordnung nach einem der Ansprüche 1 bis 9, wobei die Ionenaustauschkapazität des Polymers (H) von 1,1 bis 2,8 Milliäquivalente/g beträgt.

11. Membranelektrodenanordnung nach einem der Ansprüche 1 bis 10, wobei der TQ-Wert des Polymers (H) von 200 bis 330 °C, bestimmt wie in der Beschreibung angegeben, beträgt.

12. Membranelektrodenanordnung nach einem der Ansprüche 1 bis 11, die für eine Polymerelektrolyt-Brennstoffzelle geeignet ist.

13. Polymerelektrolyt-Brennstoffzelle, umfassend eine Membranelektrodenanordnung nach einem der Ansprüche 1 bis 12.

## Revendications

1. Ensemble de membrane-électrode qui comprend une anode ayant une couche de catalyseur contenant un polymère conducteur de proton et un catalyseur, une cathode ayant une couche de catalyseur contenant un polymère conducteur de proton et un catalyseur, et une membrane à électrolyte polymère solide disposée entre ladite anode et ladite cathode, dans lequel
ledit polymère conducteur de proton dans ladite couche de catalyseur d'au moins une de ladite anode et ladite cathode est un polymère (H) ayant des unités contenant une structure d'éther cyclique et ayant un groupe d'échange d'ions ;
ladite membrane à électrolyte polymère solide contient un polymère fluoré (S) ayant un groupe d'échange d'ions ;
l'épaisseur de ladite membrane à électrolyte polymère solide va de 5 à 15 µm ; et
lorsque la teneur en lesdites unités contenant une structure d'éther cyclique sur toutes les unités contenues dans ledit polymère (H) est M1 [% en mol] et l'épaisseur de ladite membrane à électrolyte polymère solide est T1 [µm], le rapport de ladite M1 sur ladite T1 (M1/T1) est de 4,5 ou plus.

2. Ensemble de membrane-électrode selon la revendication 1, dans lequel la teneur en lesdites unités contenant une structure d'éther cyclique va de 50 à 80 % en mol sur toutes les unités contenues dans ledit polymère (H).

3. Ensemble de membrane-électrode selon la revendication 1 ou 2, dans lequel lesdites unités contenant une structure d'éther cyclique sont au moins un type d'unités sélectionnées parmi le groupe constitué d'unités représentées par la formule (u11), d'unités représentées par la formule (u12), d'unités représentées par la formule (u21), d'unités représentées par la formule (u22) et d'unités représentées par la formule (u24) : 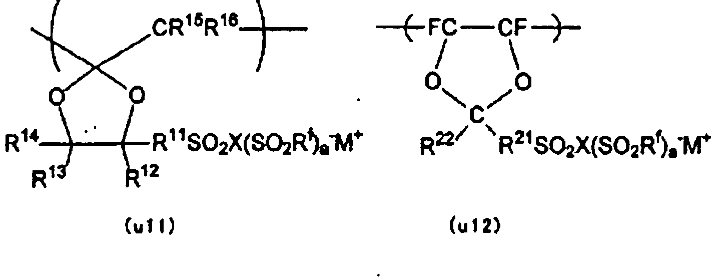 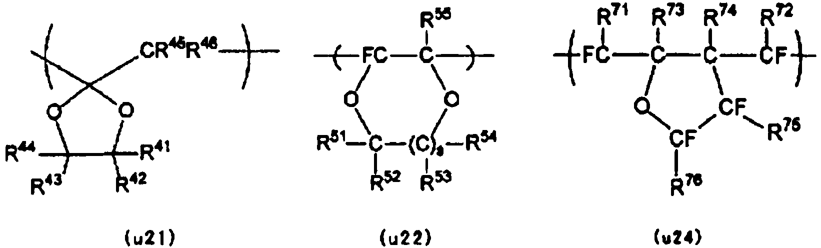
dans la formule (u11), R¹¹ est un groupe perfluoroalkylène divalent qui peut avoir un atome d'oxygène de liaison à l'éther, R¹², R¹³, R¹⁵ et R¹⁶ sont chacun indépendamment un groupe perfluoroalkyle monovalent qui peut avoir un atome d'oxygène de liaison à l'éther ou un atome de fluor, et R¹⁴ est un groupe perfluoroalkyle monovalent qui peut avoir un atome d'oxygène de liaison à l'éther, un atome de fluor ou -R¹¹(SO₂X(SO₂R^{f})ₐ)⁻M⁺, où M⁺ est H⁺, un cation métallique monovalent ou un ion ammonium dans lequel au moins un atome d'hydrogène peut être substitué par un groupe hydrocarbure, R^{f} est un groupe perfluoroalkyle linéaire ou ramifié qui peut avoir un atome d'oxygène de liaison à l'éther, X est un atome d'oxygène, un atome d'azote ou un atome de carbone, et lorsque X est un atome d'oxygène, a = 0, lorsque X est un atome d'azote, a = 1 et lorsque X est un atome de carbone, a = 2 ;
dans la formule (u12), R²¹ est un groupe perfluoroalkylène en C₁₋₆ ou un groupe perfluoroalkylène en C₂₋₆ ayant un atome d'oxygène de liaison à l'éther entre des liaisons carbone-carbone, R²² est un atome de fluor, un groupe perfluoroalkyle en C₁₋₆, un groupe perfluoroalkyle en C₂₋₆ ayant un atome d'oxygène de liaison à l'éther entre des liaisons carbone-carbone ou un groupe représenté par -R²¹(SO₂X(SO₂R^{f})ₐ)⁻M⁺, où M⁺, R^{f}, X et a sont identiques à la définition ci-dessus ;
dans la formule (u21), R⁴¹, R⁴², R⁴³, R⁴⁴, R⁴⁵ et R⁴⁶ sont chacun indépendamment un groupe perfluoroalkyle monovalent qui peut avoir un atome d'oxygène de liaison à l'éther ou un atome de fluor ;
dans la formule (u22), s est 0 ou 1, R⁵¹ et R⁵² sont chacun indépendamment un atome de fluor, un groupe perfluoroalkyle en C₁₋₅ ou un anneau spiro formé en se reliant l'un à l'autre (à condition que s soit 0), R⁵³ et R⁵⁴ sont chacun indépendamment un atome de fluor ou un groupe perfluoroalkyle en C₁₋₅, et R⁵⁵ est un atome de fluor, un groupe perfluoroalkyle en C₁₋₅ ou un groupe perfluoroalcoxy en C₁₋₅ ; et
dans la formule (u24), R⁷¹, R⁷², R⁷³, R⁷⁴, R⁷⁵ et R⁷⁶ sont chacun indépendamment un groupe perfluoroalkyle monovalent qui peut avoir un atome d'oxygène de liaison à l'éther ou un atome de fluor.

4. Ensemble de membrane-électrode selon la revendication 3, dans lequel lesdites unités contenant une structure d'éther cyclique incluent des unités représentées par ladite formule (u22).

5. Ensemble de membrane-électrode selon la revendication 4, dans lequel lorsque la teneur en ladite formule (u22) sur toutes les unités contenues dans ledit polymère (H) est M2 [% en mol], le rapport de ladite M2 sur ladite T1 (M2/T1) est de 4,5 ou plus.

6. Ensemble de membrane-électrode selon l'une quelconque des revendications 1 à 5, dans lequel ledit polymère (H) a en outre des unités basées sur un perfluoromonomère, et lesdites unités basées sur un perfluoromonomère sont des unités qui ne contiennent pas de structure d'éther cyclique et ont un groupe d'échange d'ions.

7. Ensemble de membrane-électrode selon la revendication 6, dans lequel lesdites unités basées sur un perfluoromonomère sont des unités représentées par la formule (u32) : 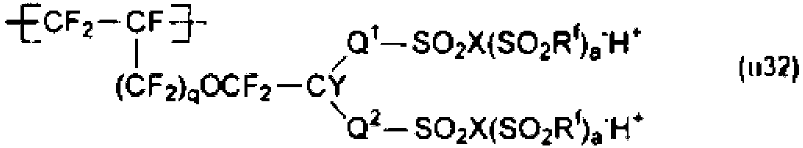 dans la formule (u32), Q¹ est un groupe perfluoroalkylène qui peut avoir un atome d'oxygène de liaison à l'éther, Q² est une liaison simple ou un groupe perfluoroalkylène qui peut avoir un atome d'oxygène de liaison à l'éther, Y est un atome de fluor ou un groupe perfluoroalkyle monovalent, q est 0 ou 1, R^{f} sont, s'ils sont deux ou plus, chacun indépendamment un groupe perfluoroalkyle linéaire ou ramifié qui peut avoir un atome d'oxygène de liaison à l'éther, une pluralité de X sont chacun indépendamment un atome d'oxygène, un atome d'azote ou un atome de carbone, et lorsque X est un atome d'oxygène, a = 0, lorsque X est un atome d'azote, a = 1 et lorsque X est un atome de carbone, a = 2.

8. Ensemble de membrane-électrode selon l'une quelconque des revendications 1 à 7, dans lequel ledit polymère fluoré (S) a au moins une d'unités représentées par la formule (u31) et d'unités représentées par la formule (u32) : 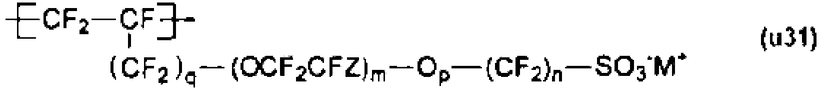 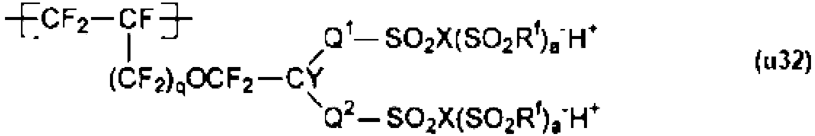
dans la formule (u31), Z est un atome de fluor ou un groupe trifluorométhyle, q est 0 ou 1, m est un entier allant de 0 à 3, p est 0 ou 1, n est un entier allant de 1 à 12, m+p>0, M⁺ est H⁺, un cation métallique monovalent ou un ion ammonium dans lequel au moins un atome d'hydrogène peut être substitué par un groupe hydrocarbure ;
dans la formule (u32), Q¹ est un groupe perfluoroalkylène qui peut avoir un atome d'oxygène de liaison à l'éther, Q² est une liaison simple ou un groupe perfluoroalkylène qui peut avoir un atome d'oxygène de liaison à l'éther, Y est un atome de fluor ou un groupe perfluoroalkyle monovalent qui peut avoir un atome d'oxygène de liaison à l'éther, q est 0 ou 1, R^{f} sont, s'ils sont deux ou plus, chacun indépendamment un groupe perfluoroalkyle linéaire ou ramifié qui peut avoir un atome d'oxygène de liaison à l'éther, une pluralité de X sont chacun indépendamment un atome d'oxygène, un atome d'azote ou un atome de carbone, et lorsque X est un atome d'oxygène, a = 0, lorsque X est un atome d'azote, a = 1 et lorsque X est un atome de carbone, a = 2.

9. Ensemble de membrane-électrode selon l'une quelconque des revendications 1 à 8, dans lequel le groupe d'échange d'ions qu'a ledit polymère (H) est un groupe représenté par la formule (g1) :
-(SO₂X(SO₂R^{f})ₐ)⁻M⁺ (g1)
dans la formule (g1), M⁺ est H⁺, un cation métallique monovalent ou un ion ammonium dans lequel au moins un atome d'hydrogène peut être substitué par un groupe hydrocarbure, R^{f} sont, s'ils sont deux ou plus, chacun indépendamment un groupe perfluoroalkyle linéaire ou ramifié qui peut avoir un atome d'oxygène de liaison à l'éther, et une pluralité de X sont chacun indépendamment un atome d'oxygène, un atome d'azote ou un atome de carbone, et lorsque X est un atome d'oxygène, a = 0, lorsque X est un atome d'azote, a = 1 et lorsque X est un atome de carbone, a = 2.

10. Ensemble de membrane-électrode selon l'une quelconque des revendications 1 à 9, dans lequel la capacité d'échange d'ions du polymère (H) va de 1,1 à 2,8 milliéquivalents/g.

11. Ensemble de membrane-électrode selon l'une quelconque des revendications 1 à 10, dans lequel la valeur TQ du polymère (H) va de 200 à 330 °C, déterminée tel que décrit dans la description.

12. Ensemble de membrane-électrode selon l'une quelconque des revendications 1 à 11, qui convient à une pile à combustible à électrolyte polymère.

13. Pile à combustible à électrolyte polymère comprenant un ensemble de membrane-électrode selon l'une quelconque des revendications 1 à 12.
